# EUROPEAN PATENT APPLICATION

(11) **EP 4 478 186 A1**
(43) Date of publication of application: **18.12.2024**
(21) Application number: 23859045.9
(22) Date of filing: 01.08.2023
(51) Int. Cl.: G06F 9/451

(54) **INTERFACE DISPLAY METHOD, AND DEVICE AND SYSTEM**

(30) Priority: 31.08.2022 CN 202211056295
(71) Applicant: Huawei Technologies Co., Ltd., Shenzhen, Guangdong 518129 (CN)
(72) Inventor: SHEN, Jing, Shenzhen, Guangdong 518129 (CN); LI, Zimian, Shenzhen, Guangdong 518129 (CN); SONG, Yanan, Shenzhen, Guangdong 518129 (CN); BAI, Haili, Shenzhen, Guangdong 518129 (CN); HUA, Junbo, Shenzhen, Guangdong 518129 (CN)
(74) Representative: Maiwald GmbH
(86) International application number: PCT/CN2023/110580
(87) International publication number: WO 2024/046010

(57) **Abstract**

This application provides an interface display method, a device, and a system. The method includes: determining a static subtree from a render tree based on interface information of a to-be-displayed interface, where the render tree is used to obtain a current interface through rendering, the static subtree includes an invariant node, and a node corresponding to content that is not updated on the to-be-displayed interface includes the invariant node; updating the static subtree to a static node, where the static node includes data of each node in the static subtree; updating data of a variant node in the render tree based on the interface information, where the variant node is a node other than the static node in the render tree; drawing the to-be-displayed interface based on an updated render tree; and displaying the drawn to-be-displayed interface. According to the method, power consumption in an interface display process can be effectively reduced.

## Description

This application claims priority to Chinese Patent Application No. 202211056295.5, filed with the China National Intellectual Property Administration on August 31, 2022 and entitled "INTERFACE DISPLAY METHOD, DEVICE, AND SYSTEM", which is incorporated herein by reference in its entirety.

### TECHNICAL FIELD

Embodiments of this application relate to terminal technologies, and in particular, to an interface display method, a device, and a system.

### BACKGROUND

Currently, most electronic devices can provide user interfaces (user interfaces, ills) for interacting with users. A process of displaying a user interface by an electronic device may include: A central processing unit (central processing unit, CPU) in the electronic device draws display content of the interface, converts a draw instruction into a render instruction, for example, an OpenGL instruction, and submits the render instruction to a graphics processing unit (graphics processing unit, GPU); the GPU performs rendering to obtain a render result; a composite module of the electronic device composes the render result; and a display of the electronic device displays a composed render result as the user interface.

Display of the user interface on the electronic device is one of main sources that affect device endurance. Therefore, how to reduce power consumption in an interface display process is a research direction in the industry.

### SUMMARY

This application provides an interface display method, a device, and a system. In the method, a static node in a render tree corresponding to an interface may be determined, and then the render tree is pruned and/or render information corresponding to the static node is stored, so that power consumption in an interface display process can be effectively reduced.

According to a first aspect, an embodiment of this application provides an interface display method. The method includes:
determining a static subtree from a render tree based on interface information of a to-be-displayed interface, where the render tree is used to obtain a current interface through rendering, the static subtree includes an invariant node, and a node corresponding to content that is not updated on the to-be-displayed interface includes the invariant node;
updating the static subtree to a static node, where the static node includes data of each node in the static subtree;
updating data of a variant node in the render tree based on the interface information, where the variant node is a node other than the static node in the render tree;
drawing the to-be-displayed interface based on an updated render tree; and
displaying the drawn to-be-displayed interface.

In this embodiment of this application, an electronic device may determine the invariant node in the render tree based on the interface information of the to-be-displayed interface; determine the static subtree based on the invariant node; prune the render tree, that is, update the static subtree to a static node; update the data of the variant node in the render tree based on the interface information; and finally draw the to-be-displayed interface based on the updated render tree, and display the drawn to-be-displayed interface.

In the conventional technology, because the invariant node is not determined, and the render tree is not pruned, the electronic device needs to traverse the entire render tree, and update data of all nodes in the render tree one by one. In a drawing process, the data needs to be extracted from all the nodes in the render tree one by one, resulting in a huge waste of power consumption. However, in this embodiment of this application, the invariant node whose data does not vary is determined from the render tree. Therefore, during update, the electronic device does not need to traverse the entire render tree, and needs to update only data of the variant node. Because the render tree is pruned, in a drawing process, a quantity of nodes and a quantity of layers traversed when the data is extracted from all the nodes one by one are reduced. This greatly reduces power consumption.

With reference to the first aspect, in a possible implementation, the determining a static subtree from a render tree includes:
adding 1 to an invariance count of the node corresponding to the content that is not updated, to obtain an updated invariance count;
determining, as the invariant node, a node whose updated invariance count is greater than a preset count; and
determining connected invariant nodes as the static subtree.

In this embodiment of this application, the electronic device may update the invariance count of the node corresponding to the content that is not updated, determine, as the invariant node, the node whose updated invariance count is greater than the preset count, and determine the connected invariant nodes as the static subtree. In this method, a node that does not vary a plurality of times is determined as the invariant node, and then the static subtree is determined. This can avoid a power consumption loss in a pruning process caused by occasional invariant nodes.

With reference to the first aspect, in a possible implementation, the static subtree includes a root node and at least one child node, and the updating the static subtree to a static node includes:
updating data of the at least one child node to the root node;
removing the at least one child node from the render tree; and
determining the root node as the static node.

In this embodiment of this application, all data of the static subtree is stored in the root node of the static subtree. In this way, when the data of the static subtree needs to be obtained in a drawing process, data of all nodes in the static subtree may be directly obtained from the root node, and the data does not need to be queried and obtained one by one based on a tree structure. This can reduce power consumption of obtaining the data of the nodes in the drawing process.

With reference to the first aspect, in a possible implementation, the drawing the to-be-displayed interface based on an updated render tree includes:
traversing the updated render tree to generate a first render instruction corresponding to the variant node and a second render instruction corresponding to the static node; and
executing the first render instruction and the second render instruction to obtain the to-be-displayed interface.

With reference to the first aspect, in a possible implementation, the method further includes:
storing the second render instruction; and
obtaining the second render instruction from a storage unit when a first interface is displayed, where the first interface is an interface to be displayed after the to-be-displayed interface, and content corresponding to the static node does not need to be updated when the first interface is displayed.

In this embodiment of this application, the second render instruction corresponding to the static node may be stored. In this way, if the static node still does not vary in a next update process, the second render instruction may be obtained from the storage unit. According to the method, power consumption of generating the second render instruction can be reduced.

With reference to the first aspect, in a possible implementation, the drawing the to-be-displayed interface based on an updated render tree includes:
obtaining, based to the updated render tree, a render instruction corresponding to the variant node and a static render result corresponding to the static node; and
obtaining a target render result based on the render instruction corresponding to the variant node and the static render result, where the target render result is the to-be-displayed interface.

With reference to the first aspect, in a possible implementation, the method further includes:
storing the static render result; and
obtaining the static render result from a storage unit when the first interface is displayed, where
the first interface is an interface to be displayed after the to-be-displayed interface, and content corresponding to the static node does not need to be updated when the first interface is displayed.

In this embodiment of this application, the static render result corresponding to the static node may be stored. In this way, if the static node still does not vary in a next update process, the static render result may be obtained from the storage unit. According to the method, power consumption of generating the static render result can be reduced.

With reference to the first aspect, in a possible implementation, the drawing the to-be-displayed interface based on an updated render tree includes:
traversing the render tree to generate a first render result corresponding to the variant node and a second render result corresponding to the static node;
obtaining a first layer based on the first render result;
obtaining a second layer based on the second render result; and
composing the first layer and the second layer to obtain a target layer, where the target layer is the to-be-displayed interface.

With reference to the first aspect, in a possible implementation, the method further includes:
storing the second layer; and
obtaining the second layer from a storage unit when the first interface is displayed, where
the first interface is an interface to be displayed after the to-be-displayed interface, and content corresponding to the static node does not need to be updated when the first interface is displayed.

In this embodiment of this application, the second layer corresponding to the static node is generated, and then the second layer corresponding to the static node is stored. In this way, if the static node still does not vary in a next update process, the second layer may be obtained from the storage unit. In the conventional technology, only one layer is usually generated. In this process, display content corresponding to the invariant node needs to be repeatedly generated. However, in this embodiment of this application, the second layer corresponding to the static node is generated and stored, so that power consumption of repeatedly generating the display content corresponding to the invariant node can be reduced.

With reference to the first aspect, in a possible implementation, the node other than the static node in the render tree is the variant node; and before the render tree is traversed, and the to-be-displayed interface is drawn, the method includes:
when the variant node includes a static node updated when a second interface is displayed, restoring the static node updated when the second interface is displayed to a subtree corresponding to the static node updated when the second interface is displayed, where the second interface is an interface updated before the to-be-displayed interface is updated.

According to a second aspect, an embodiment of this application provides an interface display method. The method includes:
determining an invariant node from a render tree based on interface information of a to-be-displayed interface, where a node corresponding to content that is not updated on the to-be-displayed interface includes the invariant node;
updating data of a variant node in the render tree based on the interface information, where the variant node is a node other than the static node in the render tree;
obtaining, based on an updated render tree, first render information corresponding to the variant node and second render information corresponding to the invariant node; and
obtaining the to-be-displayed interface based on the first render information and the second render information.

In this embodiment of this application, the second render information corresponding to the invariant node may be generated. The second render information corresponding to the invariant node may be used to render the interface if the invariant node still does not vary in a next update process. In the conventional technology, render information corresponding to the invariant node needs to be repeatedly generated. However, in this embodiment of this application, render information corresponding to the invariant node is separately generated, so that power consumption of repeatedly generating the render information corresponding to the invariant node can be reduced.

With reference to the second aspect, in a possible implementation, the render information includes any one of a render instruction, a render result, and a layer.

With reference to the second aspect, in a possible implementation, content corresponding to the invariant node does not need to be updated when a first interface is displayed, and the first interface is an interface to be displayed after the to-be-displayed interface; and the method further includes:
storing the second render information; and
obtaining the second render information from a storage unit when the first interface is displayed.

According to a third aspect, an embodiment of this application provides an interface display apparatus. The apparatus includes:
a determining unit, configured to determine a static subtree from a render tree based on interface information of a to-be-displayed interface, where the render tree is used to obtain a current interface through rendering, the static subtree includes an invariant node, and a node corresponding to content that is not updated on the to-be-displayed interface includes the invariant node;
an updating unit, configured to update the static subtree to a static node, where the static node includes data of each node in the static subtree, where
the updating unit is configured to update data of a variant node in the render tree based on the interface information, where the variant node is a node other than the static node in the render tree;
a drawing unit, configured to draw the to-be-displayed interface based on an updated render tree; and
a display unit, configured to display the drawn to-be-displayed interface.

With reference to the third aspect, in a possible implementation, the determining unit is configured to:
add 1 to an invariance count of the node corresponding to the content that is not updated, to obtain an updated invariance count;
determine, as the invariant node, a node whose updated invariance count is greater than a preset count; and
determine connected invariant nodes as the static subtree.

With reference to the third aspect, in a possible implementation, the static subtree includes a root node and at least one child node, and the updating unit is configured to:
update data of the at least one child node to the root node;
remove the at least one child node from the render tree; and
determine the root node as the static node.

With reference to the third aspect, in a possible implementation, the drawing unit is configured to:
traverse the updated render tree to generate a first render instruction corresponding to the variant node and a second render instruction corresponding to the static node; and
execute the first render instruction and the second render instruction to obtain the to-be-displayed interface.

With reference to the third aspect, in a possible implementation, the apparatus further includes a storage unit. The storage unit is configured to store the second render instruction.

The drawing unit is configured to obtain the second render instruction from the storage unit when a first interface is displayed, where the first interface is an interface to be displayed after the to-be-displayed interface, and content corresponding to the static node does not need to be updated when the first interface is displayed.

With reference to the third aspect, in a possible implementation, the drawing unit is configured to:
obtain, based to the updated render tree, a render instruction corresponding to the variant node and a static render result corresponding to the static node; and
obtain a target render result based on the render instruction corresponding to the variant node and the static render result, where the target render result is the to-be-displayed interface.

With reference to the third aspect, in a possible implementation,
a storage unit is configured to store the static render result; and
the drawing unit is configured to obtain the static render result from the storage unit when a first interface is displayed, where
the first interface is an interface to be displayed after the to-be-displayed interface, and content corresponding to the static node does not need to be updated when the first interface is displayed.

With reference to the third aspect, in a possible implementation, the drawing unit is configured to:
traverse the render tree to generate a first render result corresponding to the variant node and a second render result corresponding to the static node;
obtain a first layer based on the first render result;
obtain a second layer based on the second render result; and
compose the first layer and the second layer to obtain a target layer, where the target layer is the to-be-displayed interface.

With reference to the third aspect, in a possible implementation,
the storage unit is configured to store the second layer; and
the drawing unit is configured to obtain the second layer from the storage unit when the first interface is displayed, where
the first interface is an interface to be displayed after the to-be-displayed interface, and content corresponding to the static node does not need to be updated when the first interface is displayed.

With reference to the third aspect, in a possible implementation, the node other than the static node in the render tree is the variant node; and the updating unit is configured to:
when the variant node includes a static node updated when a second interface is displayed, restore the static node updated when the second interface is displayed to a subtree corresponding to the static node updated when the second interface is displayed, where the second interface is an interface updated before the to-be-displayed interface is updated.

According to a fourth aspect, an embodiment of this application provides an interface display apparatus. The apparatus includes:
a determining unit, configured to determine an invariant node from a render tree based on interface information of a to-be-displayed interface, where a node corresponding to content that is not updated on the to-be-displayed interface includes the invariant node;
an updating unit, configured to update data of a variant node in the render tree based on the interface information, where the variant node is a node other than a static node in the render tree;
a generation unit, configured to obtain, based on an updated render tree, first render information corresponding to the variant node and second render information corresponding to the invariant node; and
a drawing unit, configured to obtain the to-be-displayed interface based on the first render information and the second render information.

With reference to the fourth aspect, in a possible implementation, the render information includes any one of a render instruction, a render result, and a layer.

With reference to the fourth aspect, in a possible implementation, the first interface is an interface to be displayed after the to-be-displayed interface; and a storage unit is configured to store the second render information.

The drawing unit is configured to:
obtain the second render information from the storage unit when the first interface is displayed.

According to a fifth aspect, this application provides a computer storage medium, including computer instructions. When the computer instructions are run on an electronic device, the electronic device is enabled to perform the interface display method according to any one of the first aspect and the possible implementations of the first aspect.

According to a sixth aspect, this application provides a computer storage medium, including computer instructions. When the computer instructions are run on an electronic device, the electronic device is enabled to perform the interface display method according to any one of the second aspect and the possible implementations of the second aspect.

According to a seventh aspect, this application provides a computer program product. When the computer program product runs on a computer, the computer is enabled to perform the interface display method according to any one of the first aspect and the possible implementations of the first aspect.

According to an eighth aspect, this application provides a computer program product. When the computer program product runs on a computer, the computer is enabled to perform the interface display method according to any one of the second aspect and the possible implementations of the second aspect.

According to a ninth aspect, this application provides a chip, including a processor and an interface. The processor and the interface cooperate with each other, so that the chip performs the interface display method according to any one of the first aspect and the possible implementations of the first aspect.

According to a tenth aspect, this application provides a chip, including a processor and an interface. The processor and the interface cooperate with each other, so that the chip performs the interface display method according to any one of the first aspect and the possible implementations of the first aspect.

It may be understood that the interface display apparatuses according to the third aspect and the fourth aspect, the computer-readable storage media according to the fifth aspect and the sixth aspect, the computer program products according to the seventh aspect and the eighth aspect, and the chips according to the ninth aspect and the tenth aspect are all configured to perform the methods provided in embodiments of this application. Therefore, for beneficial effects that can be achieved by the interface display apparatuses, the computer-readable storage media, the computer program products, and the chips, refer to the beneficial effects in the corresponding methods. Details are not described herein again.

### BRIEF DESCRIPTION OF DRAWINGS

FIG. 1A is a diagram of a structure of an electronic device 100 according to an embodiment of this application;
FIG. 1B is a block diagram of a software structure of an electronic device 100 according to an embodiment of this application;
FIG. 1C is a diagram of a graphics system framework of an electronic device 100 according to this application;
FIG. 2 is a flowchart of an interface display method according to an embodiment of this application;
FIG. 3A to FIG. 3C are some interface diagrams on an electronic device according to this application;
FIG. 4 is a flowchart of a method for determining a static subtree according to an embodiment of this application;
FIG. 5A is a diagram of a view tree according to an embodiment of this application;
FIG. 5B is a diagram of a render tree according to an embodiment of this application;
FIG. 6 is a diagram of determining a static subtree according to an embodiment of this application;
FIG. 7 is a diagram of pruning a render tree according to an embodiment of this application;
FIG. 8 is a flowchart of a to-be-displayed interface obtaining method according to an embodiment of this application;
FIG. 9 is a flowchart of another to-be-displayed interface obtaining method according to an embodiment of this application;
FIG. 10 is a flowchart of still another to-be-displayed interface obtaining method according to an embodiment of this application;
FIG. 11A is a diagram of performing an interface display method by threads according to an embodiment of this application;
FIG. 11B-1 and FIG. 11B-2 are a diagram of code logic according to an embodiment of this application;

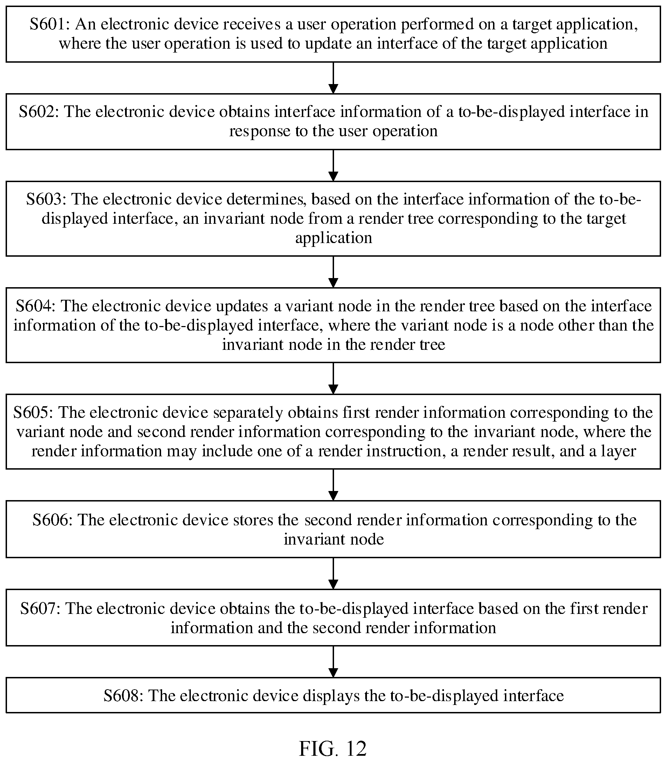

FIG. 12 is a flowchart of an interface display method according to an embodiment of this application;

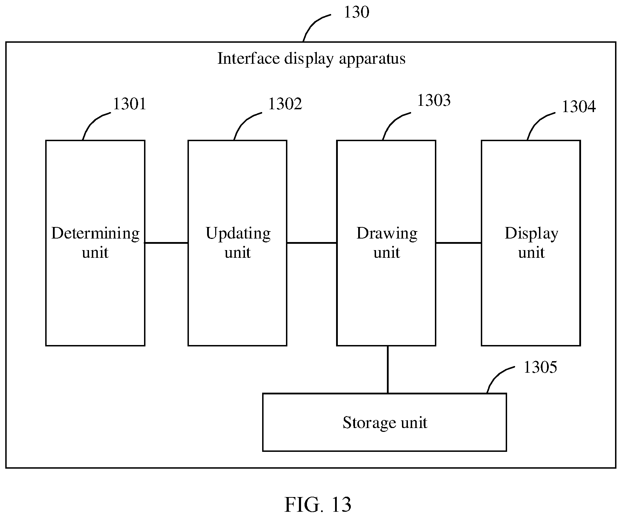

FIG. 13 is a diagram of a structure of an interface display apparatus 130 according to an embodiment of this application; and

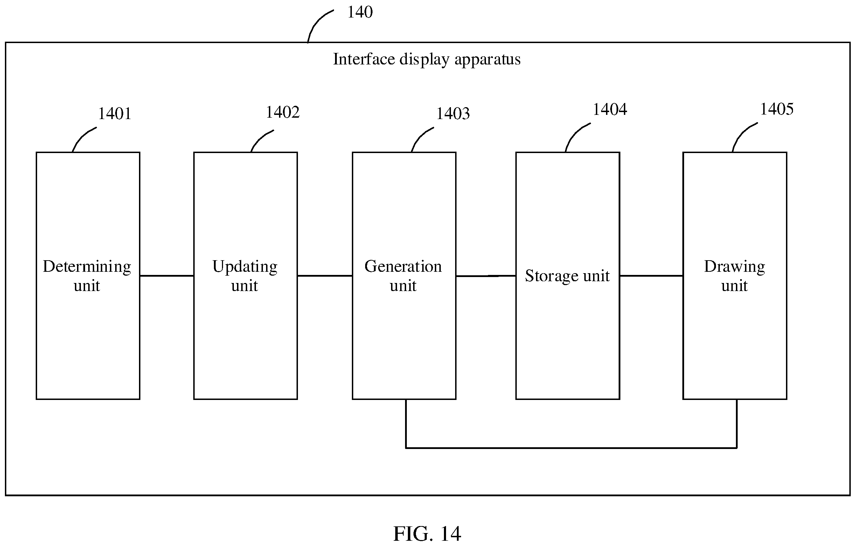

FIG. 14 is a diagram of a structure of an interface display apparatus 140 according to an embodiment of this application.

### DESCRIPTION OF EMBODIMENTS

The technical solutions according to embodiments of this application are clearly and completely described below with reference to the accompanying drawings. In descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

A term "user interface (user interface, UI)" in the following embodiments of this application is a medium interface for interaction and information exchange between a user and an application or an operating system, and implements conversion between an internal form of information and a form acceptable to the user. The user interface is source code written in a specific computer language like Java or an extensible markup language (extensible markup language, XML). The interface source code is parsed and rendered on an electronic device, and is finally presented as content that can be identified by the user. The user interface is usually represented in a form of a graphical user interface (graphical user interface, GUI), which is a user interface that is related to a computer operation and that is displayed in a graphical manner. The user interface may be a visual interface element, for example, a text, an icon, a button, a menu, a tab, a text box, a dialog box, a status bar, a navigation bar, or a widget that is displayed on a display of the electronic device.

First, technical terms in embodiments of this application are described.

### 1. Vertical synchronization (vertical synchronization, VSync) signal

The VSync signal may synchronize a display pipeline. The display pipeline includes application rendering, composite process (SurfaceFlinger) composite, and a hardware composer (Hardware Composer, HWC) for displaying an image on a screen. The VSync signal can synchronize time at which an application is wakened up to start rendering, time at which SurfaceFlinger is wakened up to compose a screen, and a screen refresh periodicity. Such synchronization can eliminate frame freezing and improve graphic visual performance.

### 2. Window or layer

Each application may have one or more windows (windows), where each window corresponds to one layer. Layer:

In an Android (Android) graphics architecture, a producer-consumer model is used to process image data. An image buffer queue is BufferQueue, and an element in the queue is GraphicBuffer.

On a producer side, a producer (for example, Surface) may render pixels (pixels) to a buffer by using OpenGL or Vulkan, and some producers may render pixels to a buffer by using canvas. Surface is the producer of BufferQueue.

On a consumer side, a layer is referred to as a layer, and a composite thread (SurfaceFlinger) is the consumer of BufferQueue. SurfaceFlinger is responsible for extracting GraphicBuffer for composite and finally composing the data into a frame buffer (FrameBuffer). The data in FrameBuffer is submitted to a screen for display.

In a non-limiting example, an Android graphics display system framework is used as an example for description.

An Android interface is usually displayed by overlaying a plurality of layers, such as a navigation bar, a status bar, a foreground application, and a floating window.

In an Android system, display of an interface needs to go through phases such as interface drawing, interface rendering, and composite display.

A window display processing procedure mainly includes: After a VSync signal arrives, a central processing unit (central processing unit, CPU) separately draws display content of each application interface, converts a draw instruction into a render instruction, for example, an OpenGL instruction, and then submits the render instruction to a graphics processing unit (graphics processing unit, GPU); and the GPU performs rendering and submits a render result to an image buffer queue. When a next VSync signal arrives, the hardware composer or the GPU composes layers in the image buffer queue, and submits a composed layer to the frame buffer. A video controller reads data in the frame buffer row by row based on the VSync signal, and then transfers the data to a display for display through possible digital-to-analog conversion.

3. A display view list (display list) is essentially a buffer (buffer) for buffering a drawing command, and records a sequence of drawing commands to be executed, including view attributes (such as a location, a size, an angle, and transparency) and a drawing interface function corresponding to a canvas (Canvas). The canvas is configured to provide an application programming interface (Application Programming Interface, API) like the drawing interface function for an application to invoke.

The API is an encapsulation and abstract expression of a specific function implemented by computer program code. The application may implement the specific function by invoking the interface.

### 4. View (view)

The view is a visual component of a user interface, and the view is also referred to as a control (control) or a widget (widget). A typical view includes a button (button), a text field (text field), a progress bar (Progress Bar), a keyboard (keyboard), a picture, a text, and the like. An attribute and content of a control on the interface are defined by using a tag or a node. For example, controls on the interface are defined by using nodes such as <Textview>, <ImgView>, and <ButtonView> in an XML. One node corresponds to one control or attribute on the interface. After being parsed and rendered, the node is displayed as user-visible content. After the node is parsed by the XML, a tree structure of the view is generated, namely, a view tree (view tree).

Interface display methods provided in embodiments of this application may be applied to an electronic device. The electronic device includes but is not limited to a mobile phone, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a tablet computer, a smart speaker, a television set-top box (set-top box, STB), or a television. A specific type of the electronic device is not limited in embodiments of this application.

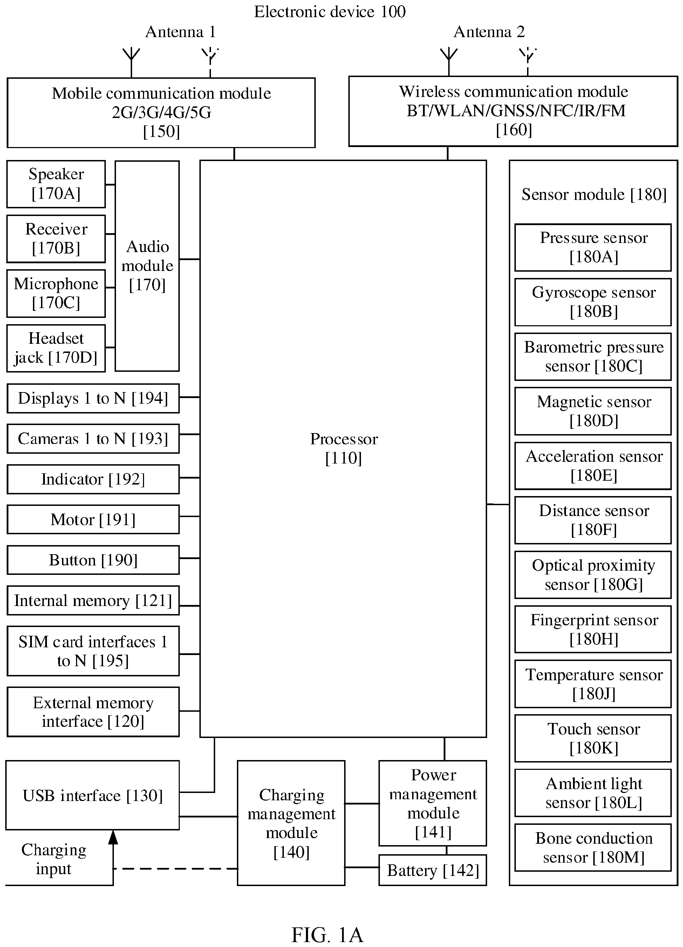

FIG. 1A shows an example of a diagram of a structure of an electronic device 100.

The electronic device 100 is used as an example below to describe embodiments in detail. It should be understood that, the electronic device 100 may have more or fewer components than those shown in the figure, may combine two or more components, or may have different component configurations. Various components shown in the figure may be implemented by using hardware including one or more signal processing and/or application-specific integrated circuits, software, or a combination of hardware and software.

The electronic device 100 may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or an arrangement of different components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces waiting time of the processor 110, to improve system efficiency.

In some embodiments, the processor 110 may include one or more interfaces.

The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160.

For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The SIM interface may be configured to communicate with the SIM card interface 195, to implement a function of transmitting data to a SIM card or reading data in a SIM card.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to perform data transmission between the electronic device 100 and a peripheral device, or may be configured to connect to a headset for playing an audio through the headset. The interface may be further configured to connect to another electronic device, for example, an AR device.

It may be understood that an interface connection relationship between modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger.

The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 can provide a solution, applied to the electronic device 100, to wireless communication including 2G/3G/4G/5G, or the like. The mobile communication module 150 may include at least one filter, a switch, a power amplifier, a low noise amplifier (low noise amplifier, LNA), and the like.

The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing.

The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in the same device as the mobile communication module 150 or another functional module.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image.

The ISP may further perform algorithm optimization on noise, brightness, and a skin tone of the image. The ISP may further optimize parameters such as exposure and a color temperature of a photographing scenario.

In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a facial recognition function, a fingerprint recognition function, and a mobile payment function), and the like. The data storage area may store data (such as facial information template data and a fingerprint information template) created during use of the electronic device 100, and the like. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for an output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines a pressure intensity based on the change in the capacitance. When a touch operation is performed on the display 194, the electronic device 100 detects an intensity of the touch operation through the pressure sensor 180A. The electronic device 100 may also calculate a touch location based on a detection signal of the pressure sensor 180A. In some embodiments, touch operations that are performed at a same touch location but have different touch operation intensities may correspond to different operation instructions. For example, when a touch operation whose touch operation intensity is less than a first pressure threshold is performed on a Messaging application icon, an instruction for viewing an SMS message is executed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a clamshell phone, the electronic device 100 may detect opening and closing of a flip cover based on the magnetic sensor 180D. Further, a feature like automatic unlocking of the flip cover is set based on a detected open or closed state of the leather case or the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application like switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED), and an optical detector like a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor located near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 is also compatible with different types of SIM cards. The SIM card interface 195 is also compatible with an external memory card. The electronic device 100 interacts with a network through the SIM card, to implement functions such as conversation and data communication.

In this embodiment, the electronic device 100 may perform an interface display method by using the processor 110, and displays, on the display 194, a to-be-displayed interface obtained according to the interface display method.

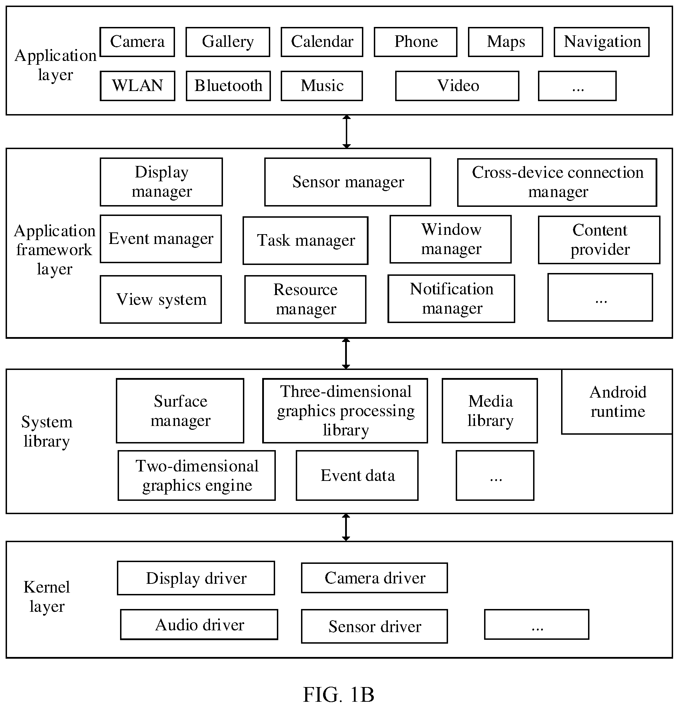

FIG. 1B is a block diagram of a software structure of an electronic device 100 according to an embodiment of this application.

In a layered architecture, software is divided into several layers, and each layer has a clear role and task. The layers communicate with each other through a software interface. In some embodiments, a system is divided into four layers: an application layer, an application framework layer, a runtime (runtime) and system library, and a kernel layer from top to bottom.

The application layer may include a series of application packages.

As shown in FIG. 1B, the application packages may include applications (which may also be referred to as applications) such as Camera, Gallery, Calendar, Phone, Maps, Navigation, WLAN, Bluetooth, Music, Video, and Messaging.

The application framework layer provides an application programming interface (application programming interface, API) and a programming framework for an application at the application layer.

The application framework layer includes some predefined functions.

As shown in FIG. 1B, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification message may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application running on a background, or may be a notification that appears on a screen in a form of a dialog interface. For example, text information is displayed in the status bar, a prompt tone is made, the electronic device vibrates, or an indicator blinks.

The runtime (runtime) includes a kernel library and a virtual machine. The runtime is responsible for scheduling and management of the system.

The kernel library includes two parts: a function that needs to be invoked in a programming language (for example, Java language), and a kernel library of the system.

The application layer and the application framework layer run on the virtual machine. The virtual machine executes programming files (for example, Java files) of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to: manage a display subsystem, and provide fusion of 2-dimensional (2-Dimensional, 2D) and 3-dimensional (3-Dimensional, 3D) layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement 3D graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

The following describes an example of a working process of software and hardware of the electronic device 100 with reference to a capturing/photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a touch single-tap operation, and a control corresponding to the touch operation is a control of a camera application icon. The camera application invokes an interface of the application framework layer, so that the camera application is started. Then, a camera driver is started by invoking the kernel layer, and a static image or a video is captured through the camera 193.

It should be noted that an operating system of the electronic device may be Android, iOS, Harmony OS (Harmony OS), or the like. This is not limited herein.

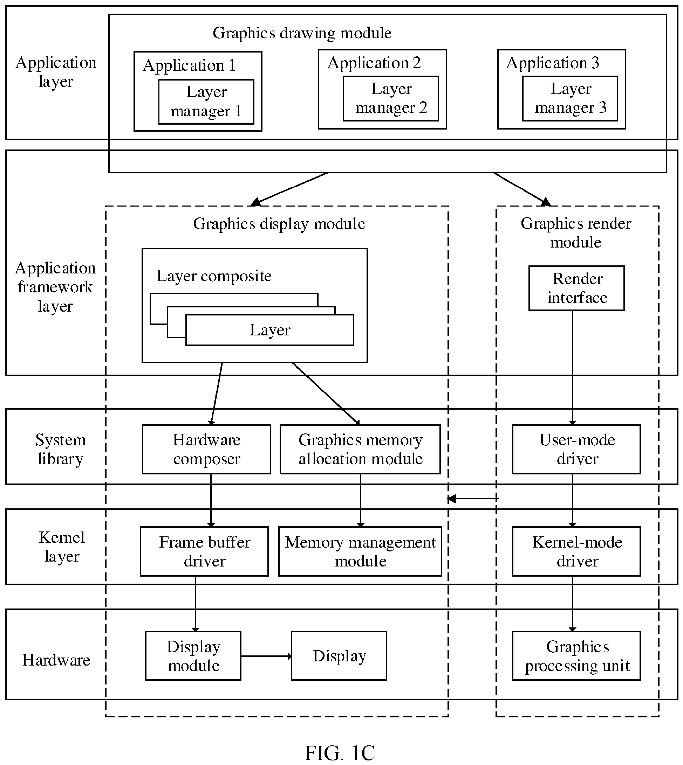

FIG. 1C is a diagram of a graphics system framework of an electronic device 100 according to this application.

As shown in FIG. 1C, the graphics system framework is divided into a graphics drawing module, a graphics render module, and a graphics display module. The graphics drawing module is located at the application layer and the application framework layer. The graphics drawing module may include a plurality of applications such as an application 1, an application 2, and an application 3. Each application has a corresponding layer manager (surface).

When an interface of an application is updated, the graphics drawing module loads UI arrangement defined by the application, performs measurement and layout on a UI, constructs a render tree corresponding to the application, converts a drawing operation of the UI into an OpenGL instruction, and submits the OpenGL instruction to the graphics render module for memory rendering.

The layer manager of the application allocates memory by using a graphics memory allocation module and a memory management module, where the memory is used to store a layer of the application. The graphics render module executes a render instruction to complete a render task. The graphics drawing module submits a rendered layer to the graphics display module for composite display. For example, after composing rendered layers of the plurality of applications, a hardware composer sends the rendered layers to a display module through a frame buffer driver module, and the display module sends the rendered layers to a display for display.

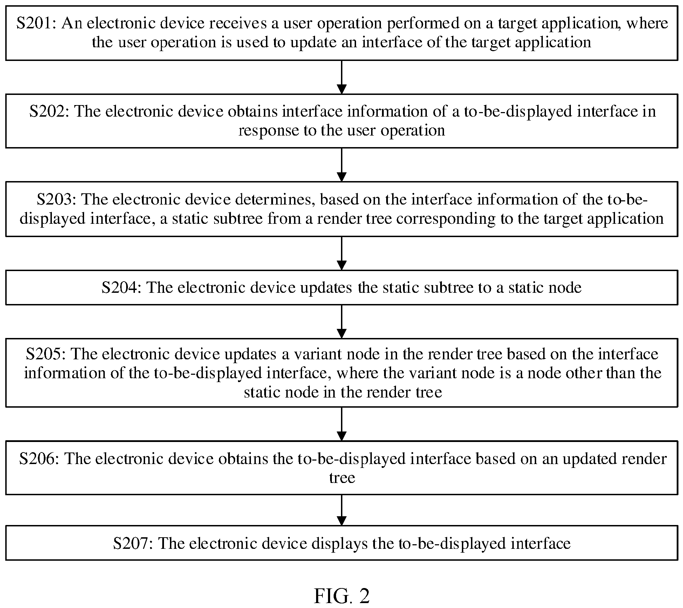

FIG. 2 is a flowchart of an interface display method according to an embodiment of this application. The method may be performed by the foregoing electronic device, and the method may include some or all of the following steps.

FIG. 2 shows an example procedure of an interface display method according to this embodiment of this application. The interface display method may include some or all of the following steps.

**S201: The electronic device receives a user operation performed on a target application, where the user operation is used to update an interface of the target application.**

In some embodiments, the electronic device displays a target application interface of the target application; and a user performs an operation like flicking on the target application interface. Correspondingly, the electronic device receives the user operation performed on the target application. For example, the target application is Huawei Video. In this case, the user may tap a control on the target application interface, to open a new interface.

An application in embodiments of this application is a computer program that can implement one or more specific functions. Usually, a plurality of applications may be installed on the electronic device, such as a camera application, a messaging application, a multimedia message application, and various mailbox applications.

An application mentioned below may be an application installed on the electronic device before delivery, or may be an application downloaded by a user from a network side in a process of using the electronic device. This is not limited in embodiments of this application.

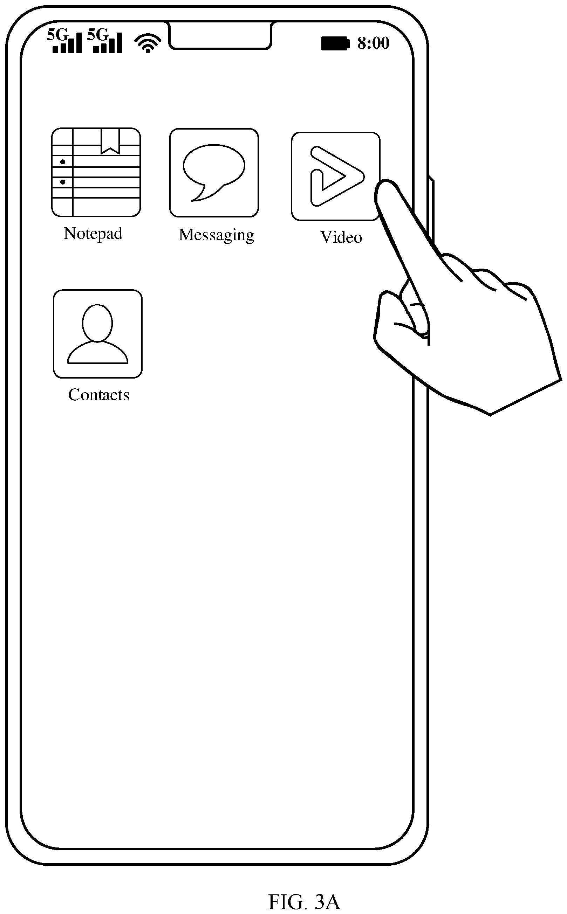

FIG. 3A to FIG. 3C are some interface diagrams on an electronic device according to this application.

FIG. 3A shows an example of a user interface displayed when a plurality of applications are displayed on the electronic device. As shown in FIG. 3A, the user interface may include a plurality of applications such as Notepad, Messaging, Video, and Contacts. It may be understood that FIG. 3A merely shows an example of a user interface that is of the electronic device and that includes an application, and shall not constitute a limitation on embodiments of this application.

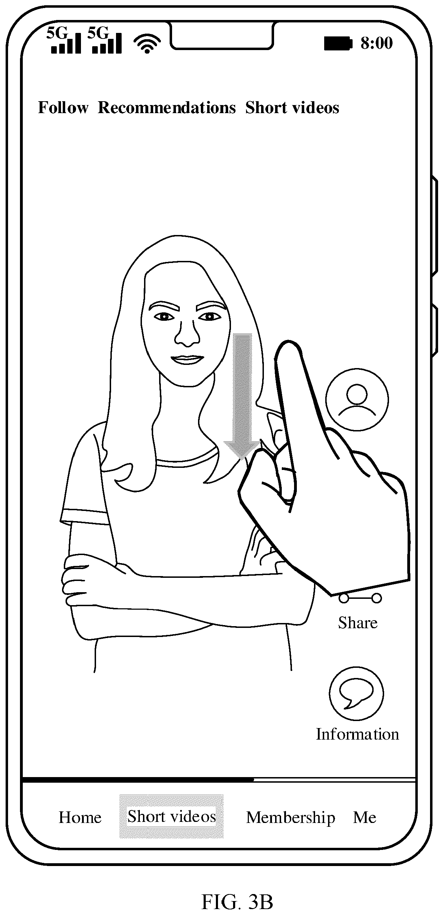

As shown in FIG. 3A, when the electronic device detects a user operation performed on the Video application, in response to the user operation, the electronic device may display a user interface shown in FIG. 3B. The user interface is an example of a video interface provided in this embodiment of this application.

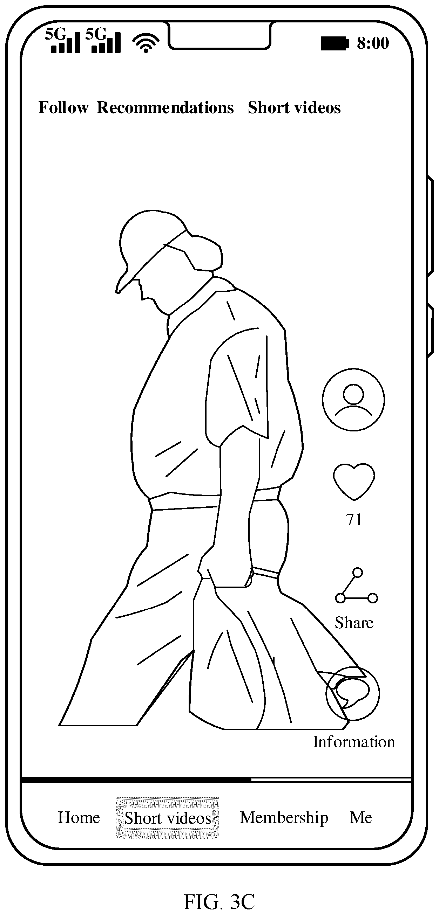

As shown in FIG. 3B, the user may flick down on a screen by using a finger, to obtain content of a next interface. Correspondingly, when the electronic device detects a user operation performed on the screen, in response to the user operation, the electronic device may display a user interface shown in FIG. 3C.

**S202: The electronic device obtains interface information of a to-be-displayed interface in response to the user operation.**

In some embodiments, the user operation indicates the to-be-displayed interface; and the electronic device obtains the interface information of the to-be-displayed interface in response to the user operation. The interface information of the to-be-displayed interface is display content of the to-be-displayed interface, for example, a video frame or text information. For example, the user operation shown in FIG. 3B indicates the user interface shown in FIG. 3C.

In some other embodiments, the electronic device does not perform step S201. The electronic device may determine the to-be-displayed interface periodically or according to a preset rule, and then perform step S203. For example, the electronic device determines the to-be-displayed interface after receiving a VSync signal by using the target application. For another example, the electronic device determines the to-be-displayed interface when a video playing application or another application actively initiates an event like updating display content on a UI interface or an animation event like dynamically updating display content of animation in the application.

**S203: The electronic device determines, based on the interface information of the to-be-displayed interface, a static subtree from a render tree corresponding to the target application.**

The render tree (Render Tree) corresponding to the target application may include one or more subtrees, where the subtree includes a render node (Render Node). The static subtree includes an invariant node. It should be noted that the render tree corresponding to the application may usually include hundreds of subtrees.

In some embodiments, the electronic device may determine, based on the interface information of the to-be-displayed interface, a variant status of a node in the render tree in current update, where the variant status includes variance and invariance; update an invariance count of the node based on the variant status in the current update; if the invariance count of the node reaches a preset count, determine the node as the invariant node; and determine the static subtree from the render tree based on the invariant node.

It should be noted that, in a process of updating the interface in this embodiment of this application, render trees with a same root node are updated, the root node does not vary in a process of updating the render trees, and all operations are started based on the root node. In this way, when the interface is updated, although node information of child nodes in the render trees varies or the render trees are pruned, for ease of description, in this embodiment of this application, the render trees with the same root node are still represented as a same render tree.

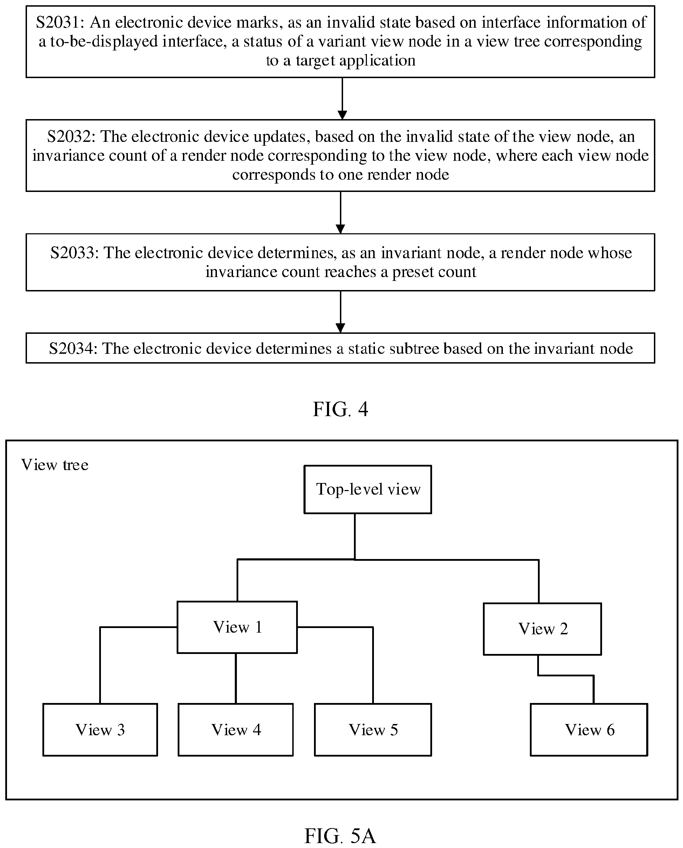

FIG. 4 is a flowchart of a method for determining a static subtree according to an embodiment of this application. The method includes all or some of the following steps.

**S2031: The electronic device marks, as an invalid state based on the interface information of the to-be-displayed interface, a status of a variant view node in a view tree corresponding to the target application.**

In an implementation, the electronic device may determine, by using a drawing thread (UI Thread) and based on the interface information of the to-be-displayed interface, an invariant view node and a variant view node in current update. For example, a view node corresponding to to-be-updated content on the to-be-displayed interface is the variant view node; and a view node corresponding to content that does not need to be updated is the invariant view node. Then, the electronic device marks a status of the variant view node and a status of a parent node of the variant view node as an invalid (invalid) state.

The invalid state indicates that the view node varies in the current update. For example, in the preset rule of the target application, if the interface information includes display content corresponding to a view node, the view node varies in the current update.

FIG. 5A is a diagram of a view tree according to an embodiment of this application.

FIG. 5A shows an example of a view tree (view tree) corresponding to the target application in the UI thread. The view tree includes a top-level view (dector view), a view 1 (view 1), a view 2 (view 2), and the like. In this case, the electronic device may mark a status of the invariant view node as an invalid state.

**S2032: The electronic device updates, based on the invalid state of the view node, an invariance count of a render node corresponding to the view node, where each view node corresponds to one render node.**

Each view node in the view tree is in a one-to-one correspondence with the render node in the render tree.

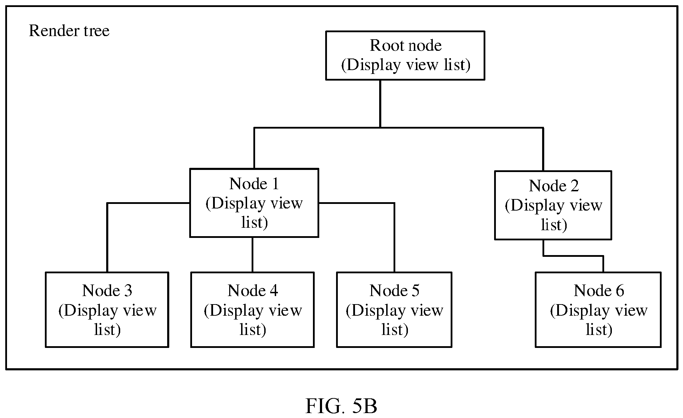

FIG. 5B is a diagram of a render tree according to an embodiment of this application.

FIG. 5B shows an example of the render tree corresponding to the view tree shown in FIG. 5A. One view in FIG. 5A corresponds to one render node in FIG. 5B. For example, the view 1 corresponds to a node 1, and the view 2 corresponds to a node 2. The rest may be deduced by analogy.

In an implementation, when the view node does not have a mark indicating the invalid state, the electronic device updates the invariance count of the render node corresponding to the view node by adding 1 to an original invariance count. For example, if the view 1, a view 3, a view 4, and a view 5 in FIG. 5A are all marked as the invalid state, the electronic device may add 1 to invariance counts of the node 1, a node 3, a node 4, and a node 5 in FIG. 5B.

Further, the electronic device may clear invariance counts corresponding to the render nodes corresponding to the marked view nodes. For example, in FIG. 5B, an invariance count corresponding to the node 1 is 2, and an invariance count corresponding to the node 2 is 2. In this case, after the view 1 in FIG. 5A is not marked and the view 2 is marked as the invalid state, the electronic device may update the invariance count of the node 1 in FIG. 5B to 3, and update the invariance count of the node 2 to 0.

**S2033: The electronic device determines, as the invariant node, a render node whose invariance count reaches the preset count.**

It should be noted that the preset count is not limited herein.

For example, the preset count is 3. If the invariance count of the node 5 is updated to 3, the electronic device may determine the node 5 as the invariant node.

It may be understood that the invalid state is used to mark a currently variant node and a currently invariant node. Further, the electronic device determines the invariant node from currently invariant nodes.

**S2034: The electronic device determines the static subtree based on the invariant node.**

The static subtree includes at least one invariant node.

In some embodiments, the electronic device determines connected invariant nodes as the static subtree. It should be noted that, if the invariant node is not connected to another invariant node, the electronic device may alternatively determine the invariant node as the static subtree.

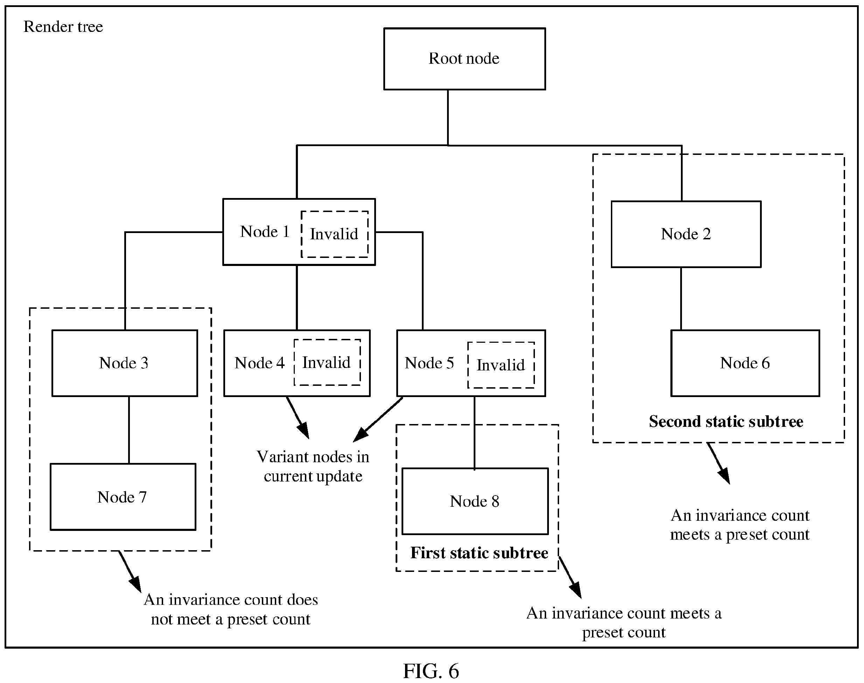

FIG. 6 is a diagram of determining a static subtree according to an embodiment of this application. As shown in FIG. 6, FIG. 6 shows an example of a render tree. The render tree includes a root node and nine nodes, namely, a node 1 to a node 8.

It is assumed that invariant view nodes in current update are the node 4 and the node 5. The electronic device marks the node 4, the node 5, and a parent node of the node 4 and the node 5, namely, the node 1, as the invalid state. Then, the electronic device clears invariance counts of the node 1, the node 4, and the node 5, and adds 1 to invariance counts of other nodes that are not marked. After invariance counts of the nodes in the render tree are updated, it is assumed that invariance counts of the node 3 and the node 7 do not meet the preset count, and invariance counts of the node 8, the node 2, and the node 6 meet a preset condition. The electronic device may determine the node 8 as a first static subtree, and determine the node 2 and the node 6 as a second static subtree.

Optionally, the electronic device may further mark the static subtree after determining the static subtree.

**S204: The electronic device updates the static subtree to a static node.**

In some embodiments, in a process of updating the render tree by using the UI thread, the electronic device prunes the marked static subtree, that is, modifies a structure of the render tree, and modifies the static subtree to a single leaf node (namely, the static node). For example, the render tree includes n static subtrees. In this case, the electronic device may update the n static subtrees to n static nodes, where n is a positive integer.

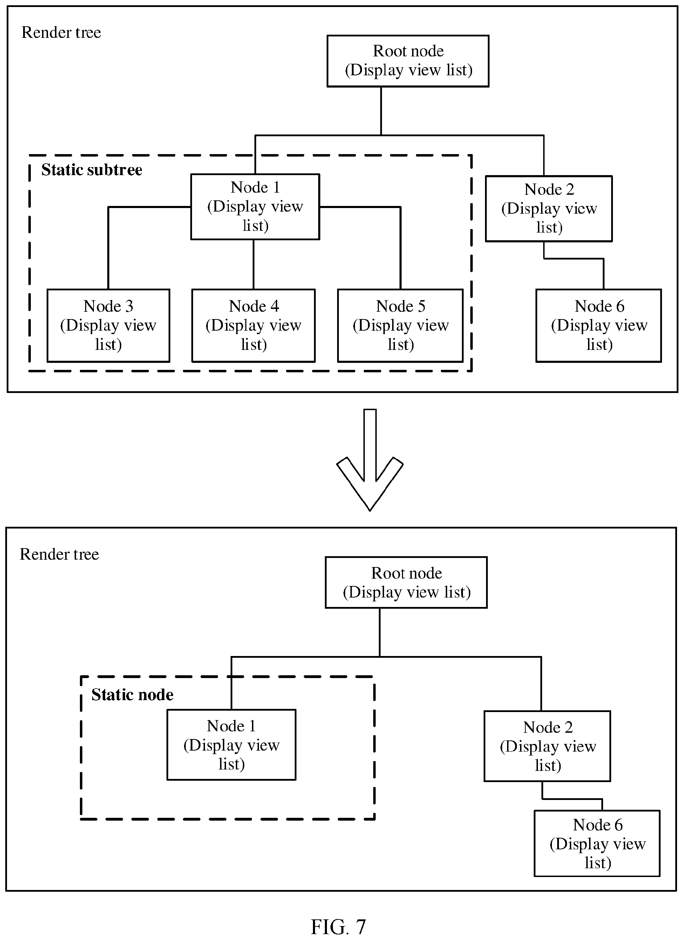

FIG. 7 is a diagram of pruning a render tree according to an embodiment of this application.

For example, FIG. 7 shows one root node (RenderNode Root) and six other nodes of the render tree (RenderNode Tree), namely, a node 1 (RenderNode 1), a node 2 (RenderNode 2), a node 3 (RenderNode 3), a node 4 (RenderNode 4), a node 5 (RenderNode 5), and a node 6 (RenderNode 6). Each node in the render tree has a corresponding display view list (display list). The node 1, the node 3, the node 4, and the node 5 form an example static subtree. In this case, the electronic device may update the static subtree to a static node (namely, an updated node 1) shown in FIG. 7. A display list in the static node includes content in each display list of the node 1, the node 3, the node 4, and the node 5. It may be understood that, when the static subtree includes a plurality of nodes, that the static subtree is updated to the static node means that the static subtree is merged into the static node.

In an implementation, after marking the static subtree by using a static subtree sensing module, the electronic device triggers pruning of the static subtree. Specifically, the electronic device may record a drawing operation of another node by using a canvas of a subtree root node of the static subtree, that is, start to build a display list (BuildDisplaylist) of the static node corresponding to the static subtree. The electronic device recursively invokes a draw function of each node in the entire static subtree in sequence, records, into the canvas of the root node, a UI drawing operation DrawOp corresponding to each node, and updates an original display list of the root node to the newly built display list.

For example, the electronic device performs beginRecording by using the UI thread to extract a canvas of a render node of the subtree root node in the static subtree to record a drawing operation, recursively traverses the entire subtree, and records drawing operations (DrawOp) of the entire subtree into the display list of the root node. That is, a display list of the render node is written into endRecording.

During extraction, the electronic device sequentially performs traversal and extracts DrawOp of each node by using a render thread (Render Thread), and the electronic device may add 1 to a count of a node on which there is actually an extraction action, and count, as 0, a node on which there is actually no extraction action, so that the UI thread identifies a static subtree of a next frame for use. It should be noted that a view actually displayed on a screen is the node on which there is the extraction action, a view actually not displayed on the screen is the node on which there is no extraction action, and the count is a drawing count.

In an implementation, the electronic device may first identify whether a subtree in the render tree is merged and whether the subtree varies in the current update. If the subtree is merged and varies, the electronic device restores the subtree to a pre-merging subtree; or if the subtree is not merged and does not vary currently, the electronic device identifies whether the subtree is the static subtree. When the subtree is the static subtree, the electronic device updates the static subtree to the static node.

For example, the electronic device may identify, by using an UpdateDisplaylist process in the UI thread and an identification function (for example, an ifDoRecreateDisplayList function), whether the subtree is merged and varies in the current update. If the subtree is merged and varies, the electronic device rebuilds a pre-merging display list after returning true. If the subtree is not merged and does not vary, a static subtree processing module executes the identification function (ifDoMerge()) to identify whether the subtree needs to be merged. A merging condition may be that an invariance count of the subtree is greater than a merging threshold. If the subtree needs to be merged, the subtree is the static subtree.

It should be noted that, for a case in which the subtree is merged but does not vary and a case in which the subtree is not merged but varies, there is no need to identify whether the subtree in the two cases needs to be merged.

The merging condition may alternatively be that an invariance count of the subtree is greater than a trigger merging threshold, and the subtree includes the view actually displayed on the screen. The electronic device may determine, as the view actually displayed on the screen, a view whose drawing count is greater than a preset quantity of frames.

In some embodiments, the electronic device may not merge a part of the static subtree. For example, there are two types of static subtrees whose invariance counts are greater than the merging threshold. A first type of static subtree includes the view actually displayed on the screen; and all nodes in a second type of static subtree are not displayed on the screen. In this case, the electronic device may update the first type of static subtree to the static node, and does not update the second type of static subtree to the static node. Further, the electronic device may mark the second type of static subtree, so that the electronic device does not traverse the second type of static subtree when traversing an updated render tree by using the render thread to perform data synchronization. This implements pruning and reduces a quantity of traversed nodes.

**S205: The electronic device updates a variant node in the render tree based on the interface information of the to-be-displayed interface, where the variant node is a node other than the static node in the render tree.**

In some embodiments, the electronic device may determine, based on the to-be-displayed interface, drawing information of the variant node, where the drawing information may include drawing data (for example, a length, a width, and a location of a view object), a UI drawing operation (for example, a draw function), and the like; and further regenerate, based on the drawing data of the node and the UI drawing operation, a display list corresponding to the variant node. One node corresponds to one display list. The display list is used to store drawing information corresponding to the node. Attributes such as a length, a width, and a location of the view object may be obtained by using the UI thread through measurement and layout (Measure & layout).

**S206: The electronic device obtains the to-be-displayed interface based on the updated render tree.**

In some embodiments, the electronic device may traverse the updated render tree to obtain a render instruction set, where the render instruction set includes a render instruction corresponding to the variant node and a render instruction corresponding to the static node. Further, the electronic device draws the to-be-displayed interface based on the render instruction set. For example, the electronic device traverses the render tree by using a SyncFrameState member function, and synchronizes a display list and attributes of the node that are obtained after the node is updated. Further, the electronic device performs full-tree depth traversal on the updated render tree by using the render thread, extracts the UI drawing operation (DrawOp), converts the UI drawing operation into an OpenGL instruction, and submits the OpenGL instruction to a GPU. Then, the electronic device performs rendering based on the OpenGL instruction through the GPU, to obtain the to-be-displayed interface.

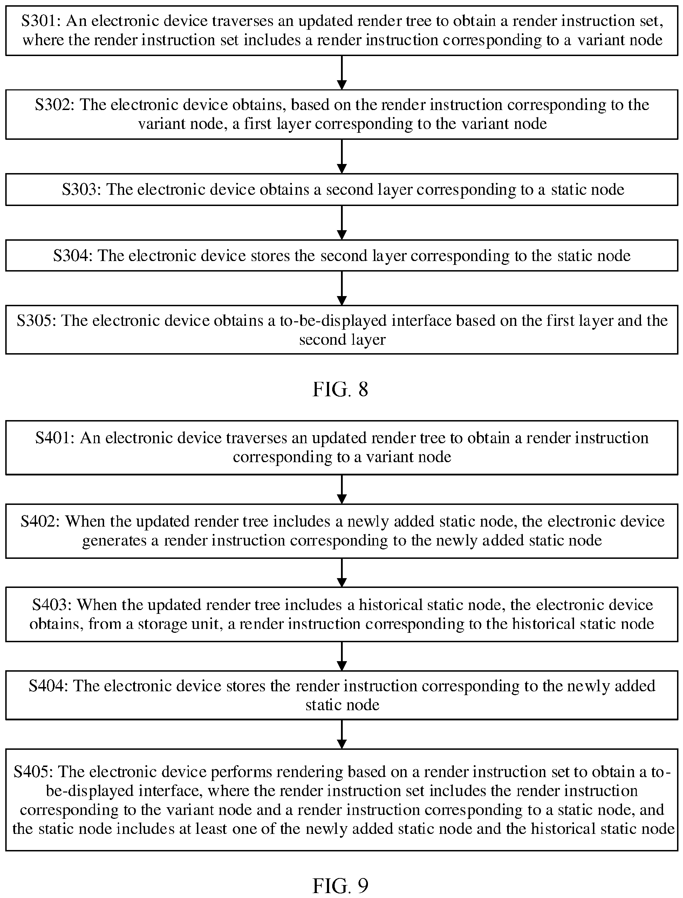

In some other embodiments, the electronic device may store render information corresponding to the static node, for example, a render instruction, a render result, or a layer. In this way, when a to-be-displayed interface of a next frame includes a same static node, the electronic device may obtain, from a storage unit, the render information corresponding to the static node, and does not need to regenerate the render information of the static node. This can reduce power consumption by reusing the render information. For specific content of this embodiment, refer to detailed content in the following embodiments in FIG. 8 to FIG. 10.

In an implementation, the electronic device first traverses the updated render tree by using the render thread to synchronously update data, and then generates a render instruction based on the updated render tree. Further, the electronic device executes the render instruction through the GPU, to obtain a render result. Finally, the electronic device obtains the render result by using a composite thread, to obtain a layer corresponding to the target application, namely, the to-be-displayed interface. When the electronic device first traverses the updated render tree by using the render thread to synchronously update the data, the electronic device may not traverse a marked static subtree, to reduce a quantity of traversed nodes.

**S207: The electronic device displays the to-be-displayed interface.**

In some embodiments, after obtaining the to-be-displayed interface, the electronic device displays the to-be-displayed interface on a display of the electronic device. The electronic device may alternatively compose the to-be-displayed interface and a layer of another application, and then display a composed interface on a display.

In some embodiments, when performing step S206, the electronic device may obtain the to-be-displayed interface according to an obtaining method shown in FIG. 8.

FIG. 8 is a flowchart of a to-be-displayed interface obtaining method according to an embodiment of this application. The method may be performed by the foregoing electronic device, and the obtaining method may include some or all of the following steps.

**S301: The electronic device traverses an updated render tree to obtain a render instruction set, where the render instruction set includes a render instruction corresponding to a variant node.**

The updated render tree includes the variant node and a static node, where the static node includes at least one of a newly added static node and a historical static node. The render instruction corresponding to the variant node may include render instructions corresponding to one or more variant nodes. One node may correspond to one or more render instructions. The newly added static node is a node that is obtained by merging the static subtree determined based on the to-be-displayed interface, where the to-be-displayed interface is an interface to be currently updated. The historical static node is a node merged in a historical update process, and the node does not vary in current update, where the historical update process is an update process obtained before the to-be-displayed interface is updated.

In some embodiments, there is no newly added static node in the updated render tree. To be specific, the electronic device identifies no newly added static subtree in the current update, and therefore there is no newly added static node. In other words, the electronic device does not perform S203 and S204. In this case, the electronic device may traverse the updated render tree to generate only the render instruction corresponding to the variant node in the render tree.

For example, the electronic device traverses the render tree by using the render thread and a SyncFrameState member function, and synchronizes a display list of an updated node. Further, the electronic device performs full-tree depth traversal on the updated render tree, extracts a drawing operation DrawOp corresponding to the variant node in the updated render tree, converts the drawing operation DrawOp into the render instruction (for example, an OpenGL instruction), and submits the render instruction to the GPU. It may be understood that, because the render tree is pruned, in SyncFrameState of the render thread, render node content is synchronized, and Draw is converted into the OpenGL instruction. The render tree is traversed twice, and a traversed depth and a quantity of traversed nodes are reduced. In this way, redundant traversal of nodes in a static subtree is removed.

In some other embodiments, the updated render tree includes a newly added static node. To be specific, the electronic device performs steps S203 and S204 on the to-be-displayed interface, to obtain the newly added static node. In this case, the electronic device may traverse the updated render tree to generate the render instruction corresponding to the variant node and a render instruction corresponding to the newly added static node, to obtain the render instruction set.

It may be understood that the electronic device may need to generate only the render instruction corresponding to the variant node and the render instruction corresponding to the currently determined static node, and a layer of the historical static node is generated and stored in the historical update process. For example, after synchronizing a display list of a node in the updated render tree by using the render thread, the electronic device performs full-tree depth traversal on the updated render tree, extracts a drawing operation DrawOp corresponding to each node in both the variant node and the newly added static node, converts the drawing operation DrawOp into a render instruction (for example, an OpenGL instruction), and submits the render instruction to the GPU.

**S302: The electronic device obtains, based on the render instruction corresponding to the variant node, a first layer corresponding to the variant node.**

The layer is a layer in a composite thread (for example, SurfaceFlinger).

In an implementation, the electronic device obtains, through the GPU and based on drawing data of the variant node and the OpenGL instruction, a render result corresponding to the variant node. Further, the electronic device obtains, by using SurfaceFlinger, the render result corresponding to the variant node, to obtain the first layer. It should be noted that the render result is interface data accessed in the GPU, the layer is interface data accessed in SurfaceFlinger, and the interface data is display data of the drawn to-be-displayed interface. In this embodiment of this application, the GPU draws the interface data at two layers, namely, the first layer and a second layer described below. The render result and the layer may be the interface data located in a shared memory (for example, a GraphicBuffer queue) shared by the GPU and SurfaceFlinger.

**S303: The electronic device obtains the second layer corresponding to the static node.**

In some embodiments, all static nodes in the updated render tree are currently updated static nodes. In this case, the electronic device generates, based on a second render instruction, the second layer corresponding to the static node. For example, the electronic device may add a layer (namely, the second layer) by using SurfaceFlinger, where the layer is used to cache a composite result constituted by a static subtree.

In some other embodiments, all static nodes in the updated render tree are historical static nodes. In this case, the electronic device obtains, from a storage unit, the second layer corresponding to the static node.

The second layer may include layers corresponding to one or more static nodes; the second layer may include a layer corresponding to the newly added static node and/or a layer corresponding to the historical static node; or the second layer may be a layer obtained by merging a layer corresponding to the newly added static node and a layer corresponding to the historical static node.

In still other embodiments, static nodes in the updated render tree include a currently updated static node and a historical static node. In this case, the electronic device may obtain, from a storage unit, a layer corresponding to the historical static node; generate, based on a second render instruction, a layer corresponding to the currently updated static node; and finally obtain the second layer, where the second layer includes the layer corresponding to the historical static node and the layer corresponding to the currently updated static node.

**S304: The electronic device stores the second layer corresponding to the static node.**

In some embodiments, after generating the second layer corresponding to the static node, the electronic device stores the second layer corresponding to the static node. For example, after generating, based on the render instruction corresponding to the newly added static node, the second layer corresponding to the static node, the electronic device stores the second layer. In an implementation, the second layer is one layer.

For example, the electronic device may draw, at the second layer, content corresponding to all static nodes, and then store the second layer. That is, the electronic device may cache a composite result of an area constituted by the static subtree. It may be understood that, if there is no newly added static subtree on an interface of a next frame, the electronic device may obtain the second layer from the storage unit, and does not need to regenerate the second layer, so that power consumption in a repeatedly drawing and rendering process in each frame can be eliminated.

In another implementation, the second layer may be one or more layers. For example, the electronic device may draw, at different layers content, corresponding to one or more static nodes, and then store the different layers. In this case, if some nodes in the foregoing static nodes are restored to static nodes on an interface of a next frame, the electronic device may obtain, from the storage unit, an unrestored layer at the second layer, and does not need to regenerate the unrestored layer. This reduces power consumption in a drawing and rendering process. For example, the electronic device generates, based on a plurality of static nodes, a layer a corresponding to a first static node, a layer b corresponding to a second static node, and a layer c corresponding to a third static node, and the electronic device stores the layer a, the layer b, and the layer c. When the interface of the next frame is updated, if the first static node and the second static node are restored to variant nodes, and the third static node is not restored, the electronic device may obtain the layer c from the storage unit, and does not need to regenerate the layer c.

**S305: The electronic device obtains the to-be-displayed interface based on the first layer and the second layer.**

In some embodiments, the electronic device composes the first layer and the second layer by using SurfaceFlinger, to obtain the to-be-displayed interface.

It should be noted that, in some embodiments, if there is no newly added static node in the render tree corresponding to the to-be-displayed interface. In this case, the electronic device may obtain the second layer from the storage unit, and may not perform step S304.

In some other embodiments, when performing step S206, the electronic device may obtain the to-be-displayed interface according to an obtaining method shown in FIG. 9. FIG. 9 is a flowchart of another to-be-displayed interface obtaining method according to an embodiment of this application. The method may be performed by the foregoing electronic device, and the obtaining method may include some or all of the following steps.

**S401: The electronic device traverses an updated render tree to obtain a render instruction corresponding to a variant node.**

For specific content of generating the render instruction by the electronic device, refer to the foregoing related descriptions. Details are not described herein again.

**S402: When the updated render tree includes a newly added static node, the electronic device generates a render instruction corresponding to the newly added static node.**

In some embodiments, when traversing the render tree by using Renderthread Draw to generate an OpenGL instruction, the electronic device regenerates only an instruction corresponding to a variant subtree and the render instruction corresponding to the newly added static node.

**S403: When the updated render tree includes a historical static node, the electronic device obtains, from a storage unit, a render instruction corresponding to the historical static node.**

**S404: The electronic device stores the render instruction corresponding to the newly added static node.**

In some embodiments, the electronic device stores the render instruction corresponding to the newly added static node. For example, the electronic device caches the OpenGL instruction (namely, a render instruction corresponding to a static node) of the entire static subtree for use on an interface updated after the to-be-displayed interface.

In an implementation, in a process of extracting DrawOp by using RenderThread Draw and converting DrawOp into the OpenGL instruction, the electronic device may cache DrawCall (a render instruction) of a marked static subtree (namely, the static node) by using a new Oplist, and merge the cached Oplist and GrRenderTargetOplist (a drawing operation list) of a current frame into one list during drawing of a next frame, to implement instruction reuse. It should be noted that this step occurs when DrawOp is converted into the OpenGL instruction in a DrawContent procedure in the render thread, and code is in a source code of a skia library.

**S405: The electronic device performs rendering based on a render instruction set to obtain the to-be-displayed interface, where the render instruction set includes the render instruction corresponding to the variant node and the render instruction corresponding to the static node, and the static node includes at least one of the newly added static node and the historical static node.**

In an implementation, the electronic device renders a memory area (for example, GraphicBuffer) by using a render pipeline generated by the GPU based on a draw instruction, to obtain a render result, and then obtains the to-be-displayed interface.

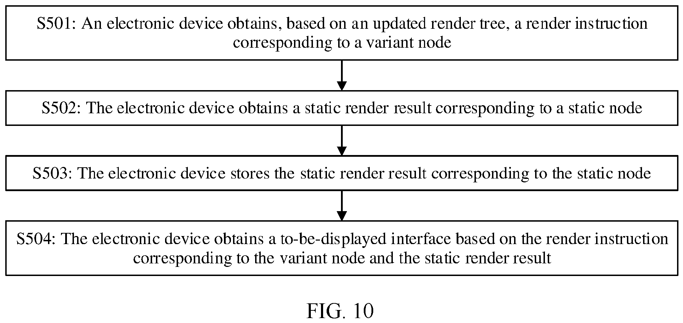

In some other embodiments, when performing step S206, the electronic device may obtain the to-be-displayed interface according to an obtaining method shown in FIG. 10. FIG. 10 is a flowchart of still another to-be-displayed interface obtaining method according to an embodiment of this application. The method may be performed by the foregoing electronic device, and the obtaining method may include some or all of the following steps.

**S501: The electronic device obtains, based on an updated render tree, a render instruction corresponding to a variant node.**

In some embodiments, there is no newly added static node in the updated render tree. In this case, the electronic device traverses the updated render tree to generate the render instruction corresponding to the variant node.

In some other embodiments, a render instruction set may further include a render instruction corresponding to a newly added static node. It may be understood that, if there is no newly added static node in the updated render tree, the render instruction set includes only the render instruction corresponding to the variant node; or if there is a newly added static node in the updated render tree, the electronic device may generate the render instruction corresponding to the newly added static node. That is, the render instruction set includes the render instruction corresponding to the variant node and the render instruction corresponding to the newly added static node.

**S502: The electronic device obtains a static render result corresponding to a static node.**

The static render result includes a render result corresponding to the newly added static node and/or a render result corresponding to a historical static node.

In some embodiments, all static nodes in the updated render tree are newly added static nodes. In this case, the electronic device generates, based on the render instruction corresponding to the newly added static node, the render result corresponding to the newly added static node, to obtain the static render result. For example, the electronic device performs rendering in a static buffer by using the GPU based on draw data of the static node and an OpenGL instruction, to obtain the static render result corresponding to the static node.

In some other embodiments, all static nodes in the updated render tree are historical static nodes. In this case, the electronic device obtains, from storage (for example, the foregoing static buffer), the render result corresponding to the historical static node, to obtain the static render result.

In still other embodiments, static nodes in the updated render tree include the newly added static node and the historical static node. In this case, the electronic device may generate, based on the render instruction corresponding to the newly added static node, the render result corresponding to the newly added static node; and obtain, from the storage unit, the render result corresponding to the historical static node, to obtain the static render result. The static render result includes the render result corresponding to the newly added static node and the render result corresponding to the historical static node.

**S503: The electronic device stores the static render result corresponding to the static node.**

In some embodiments, the electronic device stores the render result corresponding to the newly added static node.

For example, the electronic device renders, to an additionally applied buffer through the GPU, interface data corresponding to the static node, and stores a rendered buffer in a GPU-side memory on the GPU side, or places the buffer in a system cache by using a system cache resource of hardware, to improve GPU access efficiency. It should be noted that such an optimization modification may occur on instruction delivery in a render thread procedure and GPU-side driving.

**S504: The electronic device obtains the to-be-displayed interface based on the render instruction corresponding to the variant node and the static render result.**

The static render result includes at least one of the render result corresponding to the newly added static node and the render result corresponding to the historical static node.

In some embodiments, the electronic device may obtain, through rendering, the to-be-displayed interface by using the render instruction of the variant node and the static render result of the static node through the GPU. For example, the electronic device executes the render instruction of the variant node through the GPU, to obtain a render result corresponding to the variant node; and superimposes the static render result on the render result corresponding to the variant node, to obtain the to-be-displayed interface.

The static render result may be superimposed on the render result corresponding to the variant node in a texture mapping manner.

For example, the electronic device may store, in a GraphicBuffer queue through the GPU, the render result corresponding to the variant node, and store the static render result in the GPU-side memory through the GPU. Further, the electronic device superimposes, through the GPU, the static render result on the render result corresponding to the variant node in the texture mapping manner, to obtain a superimposed render result. Finally, the electronic device obtains the to-be-displayed interface from the GraphicBuffer queue by using a composite thread, where the to-be-displayed interface is the superimposed render result.

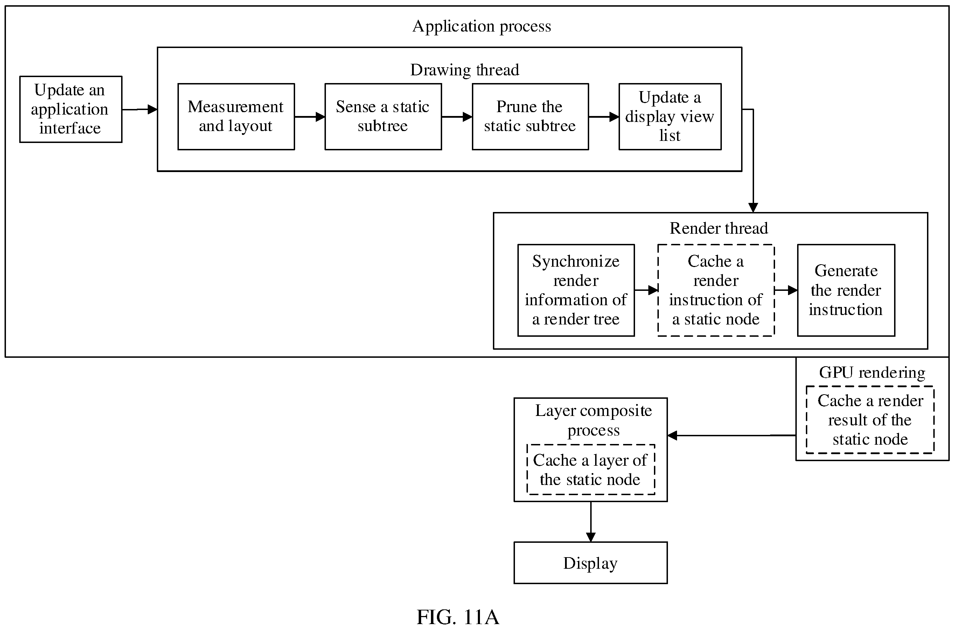

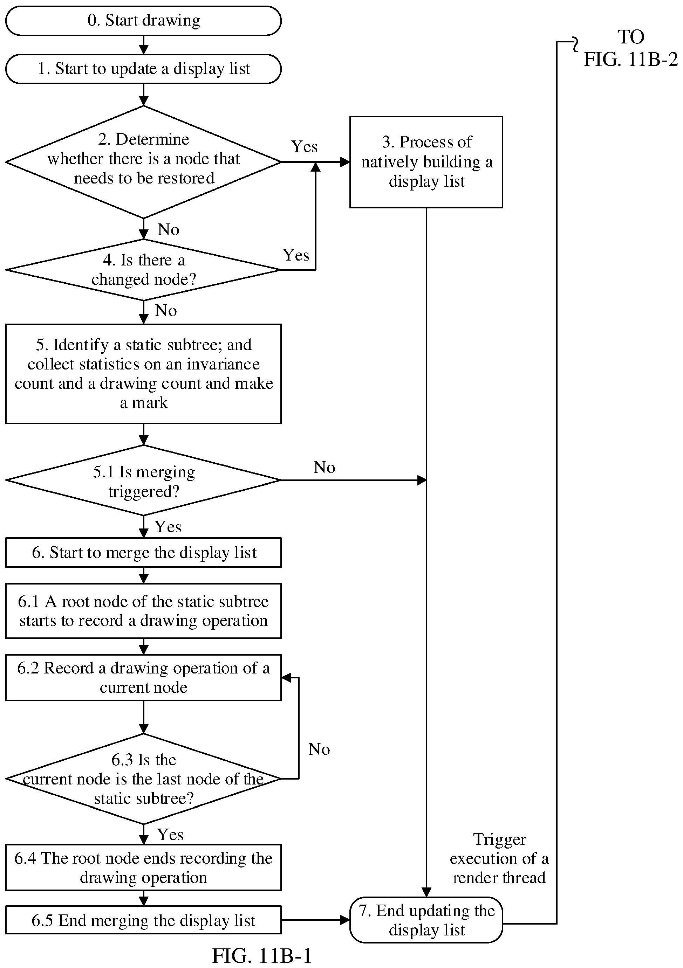

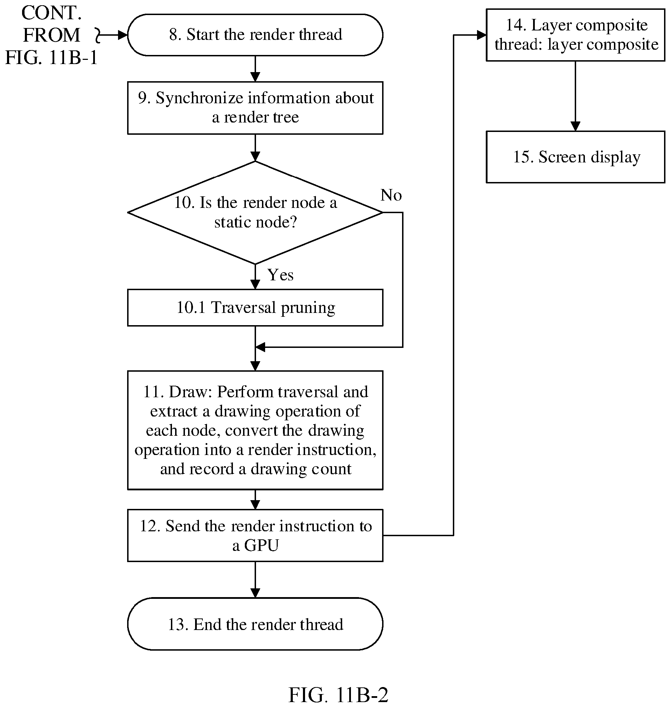

For ease of understanding of the embodiments shown in FIG. 2 to FIG. 10, the following describes steps performed by threads in the electronic device with reference to FIG. 11A.

FIG. 11A is a diagram of performing an interface display method by threads according to an embodiment of this application.

As shown in FIG. 11A, when an application interface is updated, a drawing thread (UI Thread) performs measurement and layout on a to-be-displayed interface; senses a static subtree based on the to-be-displayed interface (that is, step S203); prunes a render tree (that is, step S204); and further updates a display view list (that is, step S205).

A render thread (Render Thread) synchronizes an updated render tree from the drawing thread, generates a render instruction based on the updated render tree, and sends the render instruction to a GPU. The GPU performs rendering based on the render instruction, obtains a render result, and places the render result in a graphic buffer queue (GraphicBuffer Queue). A layer composite process (SurfaceFlinger) obtains the render result from the buffer queue, to obtain a layer (namely, the to-be-displayed interface) corresponding to the to-be-displayed interface, composes the to-be-displayed interface and another layer, and then sends a composed interface to a display module for display.

It should be noted that actions performed in three dashed boxes in FIG. 11A is optional execution steps, and the three steps are not simultaneously performed. When the three steps are not performed, that is, render information reuse is not used in the steps in the interface display method. When the render thread performs the step of caching a render instruction corresponding to a static node, the obtaining method shown in FIG. 9 is used in the steps in the interface display method. When the GPU performs the step of caching a render result of the static node, the obtaining method shown in FIG. 10 is used in the steps in the interface display method. When the layer composite thread performs the step of caching a layer corresponding to the static node, the obtaining method shown in FIG. 8 is used in the steps in the interface display method.

To facilitate understanding of the embodiments shown in FIG. 2 to FIG. 10, the following describes an interface display method according to an embodiment of this application from a perspective of code logic with reference to FIG. 11B-1 and FIG. 11B-2.

As shown in FIG. 11B-1 and FIG. 11B-2, when an electronic device starts to draw an application interface, in a process of updating a display list of each node corresponding to the interface, the electronic device first determines, from a render tree corresponding to the interface, whether there is a node that needs to be restored. If there is the node that needs to be restored, the electronic device restores a subtree corresponding to the node, and builds an original display list of the subtree; or if there is no node that needs to be restored, the electronic device determines, from the render tree, whether there is a variant node. If there is the variant node, the electronic device updates a display list of the variant node; or if there is no variant node, the electronic device identifies a static subtree from the node, and collects statistics on an invariance count and a drawing count of the node. Further, the electronic device determines, based on the collected invariance count and the collected drawing count of the node, whether merging is triggered. If the subtree meets a merging requirement (in other words, the subtree is the static subtree), the electronic device merges a display list of the subtree, and updates a display list of a root node of the subtree. A process of merging the display list of the static subtree includes: starting to record a drawing operation from the root node of the subtree; determining whether a current node is the last node of the static subtree in a process of recording a drawing operation on the current node; and recording a next child node in sequence if the current node is not the last node. The electronic device ends recording the drawing operation until the node is the last node, that is, ends merging the display list.

After ending updating the display list, the electronic device triggers a render thread to start to synchronize an updated render tree, and performs traversal pruning when the static node is not synchronized for the first time; and then starts drawing, traverses a render node to generate a render instruction, and records a drawing count. The render thread sends the render instruction to a GPU. Then, after performing layer composite, a composite thread may send a composed layer to a display module for display.

FIG. 12 is a flowchart of an interface display method according to an embodiment of this application. The method may be performed by the foregoing electronic device, and the method may include some or all of the following steps.

FIG. 12 shows an example procedure of an interface display method according to this embodiment of this application. The interface display method may include some or all of the following steps.

**S601: The electronic device receives a user operation performed on a target application, where the user operation is used to update an interface of the target application.**

For details, refer to related content in step S201. Details are not described herein again.

**S602: The electronic device obtains interface information of a to-be-displayed interface in response to the user operation.**

For details, refer to related content in step S201. Details are not described herein again.

**S603: The electronic device determines, based on the interface information of the to-be-displayed interface, an invariant node from a render tree corresponding to the target application.**

In some embodiments, the electronic device may determine, based on the to-be-displayed interface, a variant status of a node in the render tree in current update, where the variant status includes variance and invariance; update an invariance count of the node based on the variant status in the current update; and if the invariance count of the node reaches a preset count, determine the node as the invariant node.

For example, the electronic device may perform the foregoing steps S2031 to S2033 to determine the invariant node.

**S604: The electronic device updates a variant node in the render tree based on the interface information of the to-be-displayed interface, where the variant node is a node other than the invariant node in the render tree.**

For details, refer to related content in step S205. Details are not described herein again.

**S605: The electronic device separately obtains first render information corresponding to the variant node and second render information corresponding to the invariant node, where the render information may include one of a render instruction, a render result, and a layer.**

In an implementation, the render information is the render instruction. In this case, the electronic device may generate a render instruction corresponding to the variant node; when the invariant node includes a newly added invariant node, generate a render instruction corresponding to the newly added invariant node; and when the invariant node includes a historical invariant node, obtain, from a storage unit, a render instruction corresponding to the invariant node.

The newly added invariant node is an invariant node determined based on the to-be-displayed interface, where the to-be-displayed interface is an interface to be currently updated. The historical invariant node is an invariant node determined in a historical update process, and the node does not vary in current update, where the historical update process is an update process obtained before the to-be-displayed interface is updated.

In another implementation, the render information is the render result. In this case, the electronic device may generate a render result corresponding to the variant node; when the invariant node includes a newly added invariant node, generate a render result corresponding to the newly added invariant node; and when the invariant node includes a historical invariant node, obtain, from a storage unit, a render result corresponding to the invariant node.

In still another implementation, the render information is the layer. In this case, the electronic device may generate a layer corresponding to the variant node; when the invariant node includes a newly added invariant node, generate a layer corresponding to the newly added invariant node; and when the invariant node includes a historical invariant node, obtain, from a storage unit, a layer corresponding to the invariant node.

**S606: The electronic device stores the second render information corresponding to the invariant node.**

**S607: The electronic device obtains the to-be-displayed interface based on the first render information and the second render information.**

For specific content of obtaining, by the electronic device, the to-be-displayed interface based on the first render information and the second render information, refer to detailed content in the foregoing embodiments in FIG. 8 to FIG. 10.

**S608: The electronic device displays the to-be-displayed interface.**

For details, refer to related content in step S207. Details are not described herein again.

The methods in embodiments of this application are described in detail above. Apparatuses in embodiments of this application are provided below.

FIG. 13 is a diagram of a structure of an interface display apparatus 130 according to an embodiment of this application. The apparatus 130 may be an electronic device. Certainly, the apparatus 130 may alternatively be a component in an electronic device, for example, a chip or an integrated circuit. The apparatus 130 may include a determining unit 1301, an updating unit 1302, a drawing unit 1303, and a display unit 1304. The interface display apparatus 130 is configured to implement the interface display method in any embodiment shown in FIG. 12.

In a possible implementation, the determining unit 1301 is configured to determine a static subtree from a render tree based on interface information of a to-be-displayed interface, where the render tree is used to obtain a current interface through rendering, the static subtree includes an invariant node, and a node corresponding to content that is not updated on the to-be-displayed interface includes the invariant node.

The updating unit 1302 is configured to update the static subtree to a static node, where the static node includes data of each node in the static subtree.

The updating unit 1302 is configured to update data of a variant node in the render tree based on the interface information, where the variant node is a node other than the static node in the render tree.

The drawing unit 1303 is configured to draw the to-be-displayed interface based on an updated render tree.

The display unit 1304 is configured to display the drawn to-be-displayed interface.

In a possible implementation, the determining unit 1301 is configured to:
add 1 to an invariance count of the node corresponding to the content that is not updated, to obtain an updated invariance count;
determine, as the invariant node, a node whose updated invariance count is greater than a preset count; and
determine connected invariant nodes as the static subtree.

In a possible implementation, the static subtree includes a root node and at least one child node, and the updating unit 1302 is configured to:
update data of the at least one child node to the root node;
remove the at least one child node from the render tree; and
determine the root node as the static node.

In a possible implementation, the drawing unit 1303 is configured to:
traverse the updated render tree to generate a first render instruction corresponding to the variant node and a second render instruction corresponding to the static node; and
execute the first render instruction and the second render instruction to obtain the to-be-displayed interface.

In a possible implementation, the apparatus further includes a storage unit 1305. The storage unit 1305 is configured to store the second render instruction.

The drawing unit 1303 is configured to obtain the second render instruction from the storage unit when a first interface is displayed, where the first interface is an interface to be displayed after the to-be-displayed interface, and content corresponding to the static node does not need to be updated when the first interface is displayed.

In a possible implementation, the drawing unit 1303 is configured to:
obtain, based to the updated render tree, a render instruction corresponding to the variant node and a static render result corresponding to the static node; and
obtain a target render result based on the render instruction corresponding to the variant node and the static render result, where the target render result is the to-be-displayed interface.

In a possible implementation,
the apparatus further includes a storage unit 1305. The storage unit 1305 is configured to store the static render result.

The drawing unit 1303 is configured to obtain the static render result from the storage unit when a first interface is displayed, where
the first interface is an interface to be displayed after the to-be-displayed interface, and content corresponding to the static node does not need to be updated when the first interface is displayed.

In a possible implementation, the drawing unit 1303 is configured to:
traverse the render tree to generate a first render result corresponding to the variant node and a second render result corresponding to the static node;
obtain a first layer based on the first render result;
obtain a second layer based on the second render result; and
compose the first layer and the second layer to obtain a target layer, where the target layer is the to-be-displayed interface.

In a possible implementation,
the apparatus further includes a storage unit 1305. The storage unit 1305 is configured to store the second layer.

The drawing unit 1303 is configured to obtain the second layer from the storage unit when a first interface is displayed, where
the first interface is an interface to be displayed after the to-be-displayed interface, and content corresponding to the static node does not need to be updated when the first interface is displayed.

In a possible implementation, the node other than the static node in the render tree is the variant node; and the updating unit 1302 is configured to:
when the variant node includes a static node updated when a second interface is displayed, restore the static node updated when the second interface is displayed to a subtree corresponding to the static node updated when the second interface is displayed, where the second interface is an interface updated before the to-be-displayed interface is updated.

It should be noted that, for implementations of the units, refer to corresponding descriptions of the embodiment shown in FIG. 2. The interface display apparatus 130 may be the electronic device in the embodiment shown in FIG. 2.

It may be understood that, in the apparatus embodiments of this application, division into a plurality of units or modules is merely logical division based on functions, and is not intended to limit a specific structure of the apparatus. In specific implementation, some functional modules may be subdivided into more finer-grained functional modules, or some functional modules may be combined into one functional module. However, regardless of whether the functional modules are subdivided or combined, general procedures performed by the apparatus 130 in a pairing process are the same. Usually, each unit corresponds to respective program code (or program instructions). When the program code corresponding to the unit is run on a processor, the unit is controlled by the processor to perform a corresponding procedure to implement a corresponding function.

FIG. 14 is a diagram of a structure of an interface display apparatus 140 according to an embodiment of this application. The apparatus 140 may be an electronic device. Certainly, the apparatus 140 may alternatively be a component in an electronic device, for example, a chip or an integrated circuit. The apparatus 140 may include a determining unit 1401, an updating unit 1402, a generation unit 1403, a storage unit 1404, and a drawing unit 1405. The interface display apparatus 140 is configured to implement the interface display method shown in FIG. 12.

In a possible implementation, the determining unit 1401 is configured to determine an invariant node from a render tree based on interface information of a to-be-displayed interface, where a node corresponding to content that is not updated on the to-be-displayed interface includes the invariant node.

The updating unit 1402 is configured to update data of a variant node in the render tree based on the interface information, where the variant node is a node other than a static node in the render tree.

The generation unit 1403 is configured to obtain, based on an updated render tree, first render information corresponding to the variant node and second render information corresponding to the invariant node.

The drawing unit 1405 is configured to obtain the to-be-displayed interface based on the first render information and the second render information.

In a possible implementation, the render information includes any one of a render instruction, a render result, and a layer.

In a possible implementation, the storage unit 1404 is configured to store the second render information.

The drawing unit 1405 is configured to obtain the second render information from the storage unit 1404 when a first interface is displayed, where the first interface is an interface to be displayed after the to-be-displayed interface.

It should be noted that, for implementations of the units, refer to corresponding descriptions of the embodiment shown in FIG. 12. The interface display apparatus 140 may be the electronic device in the embodiment shown in FIG. 12.

An embodiment of this application further provides an electronic device. The electronic device includes one or more processors and one or more memories. The one or more memories are coupled to the one or more processors, the one or more memories are configured to store computer program code, and the computer program code includes computer instructions. When the one or more processors execute the computer instructions, the electronic device is enabled to perform the methods described in the foregoing embodiments.

An embodiment of this application further provides a computer program product including instructions. When the computer program product runs on an electronic device, the electronic device is enabled to perform the methods described in the foregoing embodiments.

An embodiment of this application further provides a computer-readable storage medium, including instructions. When the instructions are run on an electronic device, the electronic device is enabled to perform the methods described in the foregoing embodiments.

It may be understood that the implementations of this application may be randomly combined to achieve different technical effects.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are all or partially generated.

The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive)), or the like.

A person of ordinary skill in the art may understand that all or some of the procedures of the methods in the foregoing embodiments may be implemented by a computer program instructing related hardware. The program may be stored in a computer-readable storage medium. When the program is executed, the procedures in the foregoing method embodiments may be performed. The foregoing storage medium includes any medium that can store program code, for example, a ROM, a random access memory RAM, a magnetic disk, or an optical disc.

In summary, what is described above is merely embodiments of the technical solutions of this application, but is not intended to limit the protection scope of this application. Any modification, equivalent replacement, and improvement made based on the disclosure of this application shall fall within the protection scope of this application.

## Claims

1. An interface display method, wherein the method comprises:
determining a static subtree from a render tree based on interface information of a to-be-displayed interface, wherein the render tree is used to obtain a current interface through rendering, the static subtree comprises an invariant node, and a node corresponding to content that is not updated on the to-be-displayed interface comprises the invariant node;
updating the static subtree to a static node, wherein the static node comprises data of each node in the static subtree;
updating data of a variant node in the render tree based on the interface information, wherein the variant node is a node other than the static node in the render tree;
drawing the to-be-displayed interface based on an updated render tree; and
displaying the drawn to-be-displayed interface.

2. The method according to claim 1, wherein the determining a static subtree from a render tree comprises:
adding 1 to an invariance count of the node corresponding to the content that is not updated, to obtain an updated invariance count;
determining, as the invariant node, a node whose updated invariance count is greater than a preset count; and
determining connected invariant nodes as the static subtree.

3. The method according to claim 1 or 2, wherein the static subtree comprises a root node and at least one child node, and the updating the static subtree to a static node comprises:
updating data of the at least one child node to the root node;
removing the at least one child node from the render tree; and
determining the root node as the static node.

4. The method according to any one of claims 1 to 3, wherein the drawing the to-be-displayed interface based on an updated render tree comprises:
traversing the updated render tree to generate a first render instruction corresponding to the variant node and a second render instruction corresponding to the static node; and
executing the first render instruction and the second render instruction to obtain the to-be-displayed interface.

5. The method according to claim 4, wherein the method further comprises:
storing the second render instruction; and
obtaining the stored second render instruction when a first interface is displayed, wherein the first interface is an interface to be displayed after the to-be-displayed interface, and content corresponding to the static node does not need to be updated when the first interface is displayed.

6. The method according to any one of claims 1 to 3, wherein the drawing the to-be-displayed interface based on an updated render tree comprises:
obtaining, based to the updated render tree, a render instruction corresponding to the variant node and a static render result corresponding to the static node; and
obtaining a target render result based on the render instruction corresponding to the variant node and the static render result, wherein the target render result is the to-be-displayed interface.

7. The method according to claim 6, wherein the method further comprises:
storing the static render result; and
obtaining the stored static render result when a first interface is displayed, wherein
the first interface is an interface to be displayed after the to-be-displayed interface, and content corresponding to the static node does not need to be updated when the first interface is displayed.

8. The method according to any one of claims 1 to 3, wherein the drawing the to-be-displayed interface based on an updated render tree comprises:
traversing the render tree to generate a first render result corresponding to the variant node and a second render result corresponding to the static node;
obtaining a first layer based on the first render result;
obtaining a second layer based on the second render result; and
composing the first layer and the second layer to obtain a target layer, wherein the target layer is the to-be-displayed interface.

9. The method according to claim 8, wherein the method further comprises:
storing the second layer; and
obtaining the stored second layer when a first interface is displayed, wherein
the first interface is an interface to be displayed after the to-be-displayed interface, and content corresponding to the static node does not need to be updated when the first interface is displayed.

10. The method according to any one of claims 1 to 9, wherein before the render tree is traversed, and the to-be-displayed interface is drawn, the method comprises:
when the variant node comprises a historical static node, restoring the historical static node to a subtree corresponding to the historical static node, wherein the historical static node is a static node determined when a second interface is displayed, and the second interface is an interface displayed before the to-be-displayed interface.

11. An interface display method, wherein the method comprises:
determining an invariant node from a render tree based on interface information of a to-be-displayed interface, wherein a node corresponding to content that is not updated on the to-be-displayed interface comprises the invariant node;
updating data of a variant node in the render tree based on the interface information, wherein the variant node is a node other than a static node in the render tree;
obtaining, based on an updated render tree, first render information corresponding to the variant node and second render information corresponding to the invariant node; and
obtaining the to-be-displayed interface based on the first render information and the second render information.

12. The method according to claim 11, wherein the render information comprises any one of a render instruction, a render result, and a layer.

13. The method according to claim 11 or 12, wherein a first interface is an interface to be displayed after the to-be-displayed interface; and the method further comprises:
storing the second render information; and
obtaining the stored second render information when the first interface is displayed.

14. An interface display apparatus, comprising:
a determining unit, configured to determine a static subtree from a render tree based on interface information of a to-be-displayed interface, wherein the render tree is used to obtain a current interface through rendering, the static subtree comprises an invariant node, and a node corresponding to content that is not updated on the to-be-displayed interface comprises the invariant node;
an updating unit, configured to update the static subtree to a static node, wherein the static node comprises data of each node in the static subtree, wherein
the updating unit is configured to update data of a variant node in the render tree based on the interface information, wherein the variant node is a node other than the static node in the render tree;
a drawing unit, configured to draw the to-be-displayed interface based on an updated render tree; and
a display unit, configured to display the drawn to-be-displayed interface.

15. The apparatus according to claim 14, wherein the determining unit is configured to:
add 1 to an invariance count of the node corresponding to the content that is not updated, to obtain an updated invariance count;
determine, as the invariant node, a node whose updated invariance count is greater than a preset count; and
determine connected invariant nodes as the static subtree.

16. The apparatus according to claim 14 or 15, wherein the static subtree comprises a root node and at least one child node, and the updating unit is configured to:
update data of the at least one child node to the root node;
remove the at least one child node from the render tree; and
determine the root node as the static node.

17. The apparatus according to any one of claims 14 to 16, wherein the drawing unit is configured to:
traverse the updated render tree to generate a first render instruction corresponding to the variant node and a second render instruction corresponding to the static node; and
execute the first render instruction and the second render instruction to obtain the to-be-displayed interface.

18. The apparatus according to claim 17, wherein the apparatus further comprises a storage unit, and the storage unit is configured to store the second render instruction; and
the drawing unit is configured to obtain the second render instruction from the storage unit when a first interface is displayed, wherein the first interface is an interface to be displayed after the to-be-displayed interface, and content corresponding to the static node does not need to be updated when the first interface is displayed.

19. The apparatus according to any one of claims 14 to 16, wherein the drawing unit is configured to:
obtain, based to the updated render tree, a render instruction corresponding to the variant node and a static render result corresponding to the static node; and
obtain a target render result based on the render instruction corresponding to the variant node and the static render result, wherein the target render result is the to-be-displayed interface.

20. The apparatus according to claim 19, wherein a storage unit is configured to store the static render result; and
the drawing unit is configured to obtain the static render result from the storage unit when a first interface is displayed, wherein
the first interface is an interface to be displayed after the to-be-displayed interface, and content corresponding to the static node does not need to be updated when the first interface is displayed.

21. The apparatus according to any one of claims 14 to 16, wherein the drawing unit is configured to:
traverse the render tree to generate a first render result corresponding to the variant node and a second render result corresponding to the static node;
obtain a first layer based on the first render result;
obtain a second layer based on the second render result; and
compose the first layer and the second layer to obtain a target layer, wherein the target layer is the to-be-displayed interface.

22. The apparatus according to claim 21, wherein a storage unit is configured to store the second layer; and
the drawing unit is configured to obtain the second layer from the storage unit when a first interface is displayed, wherein
the first interface is an interface to be displayed after the to-be-displayed interface, and content corresponding to the static node does not need to be updated when the first interface is displayed.

23. The apparatus according to any one of claims 14 to 22, wherein the node other than the static node in the render tree is the variant node; and the updating unit is configured to:
when the variant node comprises a static node updated when a second interface is displayed, restore the static node updated when the second interface is displayed to a subtree corresponding to the static node updated when the second interface is displayed, wherein the second interface is an interface updated before the to-be-displayed interface is updated.

24. An interface display apparatus, wherein the apparatus comprises:
a determining unit, configured to determine an invariant node from a render tree based on interface information of a to-be-displayed interface, wherein a node corresponding to content that is not updated on the to-be-displayed interface comprises the invariant node;
an updating unit, configured to update data of a variant node in the render tree based on the interface information, wherein the variant node is a node other than a static node in the render tree;
a generation unit, configured to obtain, based on an updated render tree, first render information corresponding to the variant node and second render information corresponding to the invariant node; and
a drawing unit, configured to obtain the to-be-displayed interface based on the first render information and the second render information.

25. The apparatus according to claim 24, wherein the render information comprises any one of a render instruction, a render result, and a layer.

26. The apparatus according to claim 24 or 25, wherein a first interface is an interface to be displayed after the to-be-displayed interface; and the apparatus further comprises a storage unit, wherein
the storage unit is configured to store the second render information; and
the drawing unit is configured to:
obtain the second render information from the storage unit when the first interface is displayed.

27. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 13.

28. A computer program product comprising instructions, wherein when the computer program product runs on an electronic device, the electronic device is enabled to perform the method according to any one of claims 1 to 13.

29. A computer-readable storage medium, comprising instructions, wherein when the instructions are run on an electronic device, the electronic device is enabled to perform the method according to any one of claims 1 to 13.
